# EUROPEAN PATENT SPECIFICATION

(11) **EP 3 992 962 B1**
(45) Date of publication and mention of the grant of the patent: **28.01.2026**
(21) Application number: 20840445.9
(22) Date of filing: 15.07.2020
(51) Int. Cl.: G10L 15/22, G10L 13/033, G10L 17/00, G10L 17/22

(54) **VOICE INTERACTION METHOD AND RELATED DEVICE**
SPRACHINTERAKTIONSVERFAHREN UND ELEKTRONISCHE VORRICHTUNG
PROCÉDÉ D'INTERACTION VOCALE ET DISPOSITIF ASSOCIÉ

(30) Priority: 17.07.2019 CN 201910649383
(43) Date of publication of application: 04.05.2022
(73) Proprietor: Huawei Technologies Co., Ltd., Longgang District Shenzhen, Guangdong 518129 (CN)
(72) Inventor: ZHANG, Long, Shenzhen, Guangdong 518129 (CN); QIU, Cunshou, Shenzhen, Guangdong 518129 (CN); WEN, Yanxin, Shenzhen, Guangdong 518129 (CN); BAO, Guangzhao, Shenzhen, Guangdong 518129 (CN); MIAO, Haibo, Shenzhen, Guangdong 518129 (CN)
(74) Representative: Gill Jennings & Every LLP
(86) International application number: PCT/CN2020/101993
(87) International publication number: WO 2021/008538

(56) References cited:
- CN-A- 103 984 847
- CN-A- 108 847 226
- CN-A- 108 962 217
- CN-A- 109 150 959
- CN-A- 109 189 980
- CN-A- 109 189 980
- CN-A- 109 189 980
- CN-A- 109 509 470
- CN-A- 109 698 021
- CN-A- 109 961 330
- US-A1- 2019 051 307
- US-A1- 2019 156 830

## Description

### TECHNICAL FIELD

This application relates to the field of terminals and communications technologies, and in particular, to a voice interaction method and a related apparatus.

### BACKGROUND

With development of artificial intelligence. various intelligent electronic devices appear, such as smart speakers and smart robots. A user may communicate with an electronic device. Generally, before communicating with the electronic device, the user needs to wake up the electronic device by using a fixed wake-up word. After the electronic device is woken up, the user can freely communicate with the electronic device. For example, the user may ask the electronic device about weather, or ask the electronic device to play TV series. However, a dialog between the electronic device and the user is not specific. In other words, the electronic device responds in a same manner as long as different users say similar words.

CN109509470A relates to voice interaction method and device, computer readable storage medium and terminal device. CN109189980A relates to a method for performing voice interaction with a user and an electronic device.

### SUMMARY

Implementations of this application provide a voice interaction method and a related apparatus, so that a tone for responding to a voice signal of a user can be obtained based on personal information associated with a voiceprint feature of the voice signal, to communicate in the tone that meets a user requirement, thereby improving user experience.

The invention is defined in the independent claims. Preferred embodiments are defined in the dependent claims.

The invention provides a voice interaction method performed by an electronic device, as set forth in independent claim 1, and an electronic device, as set forth in independent claim 4.

### BRIEF DESCRIPTION OF DRAWINGS

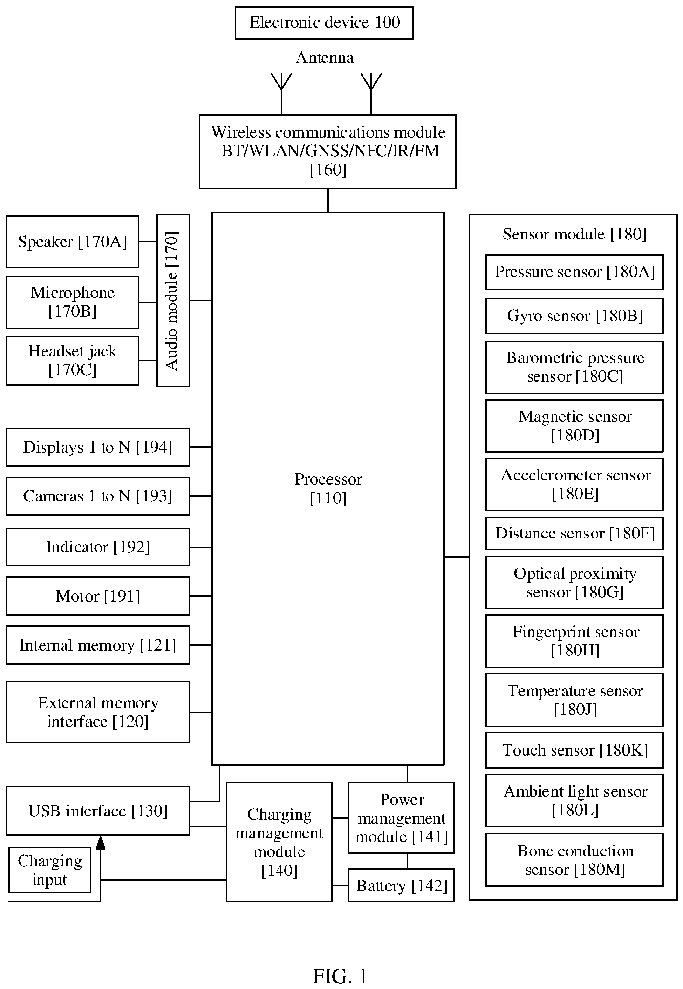

FIG. 1 is a schematic diagram of a structure of an electronic device according to an implementation of this application;
FIG. 2A-1 and FIG. 2A-2 to FIG. 2G-1 to FIG. 2G-3 are human-computer interaction diagrams of voiceprint registration according to an implementation of this application;
FIG. 3 is a flowchart of voiceprint registration according to an implementation of this application;
FIG. 4 is a schematic diagram of an information structure according to an implementation of this application;

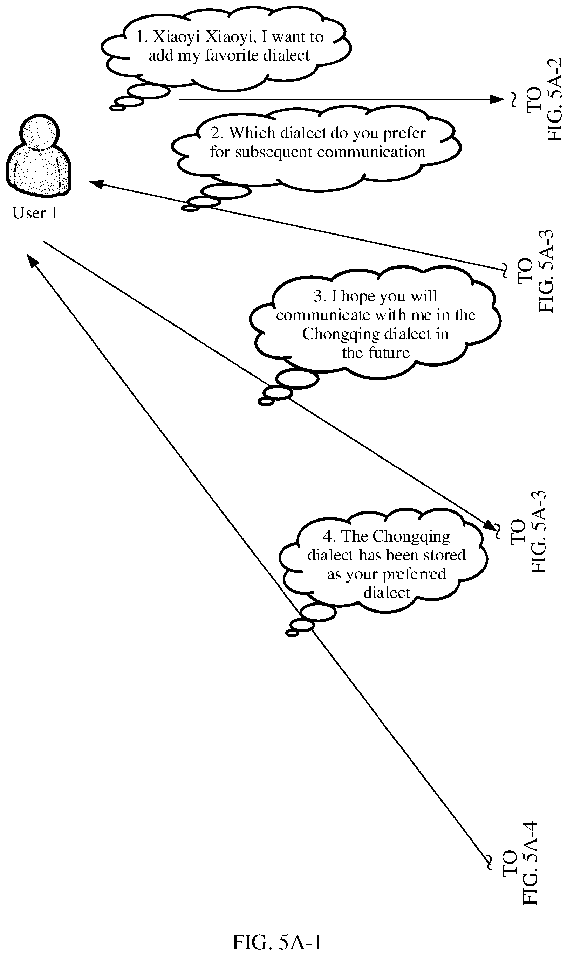

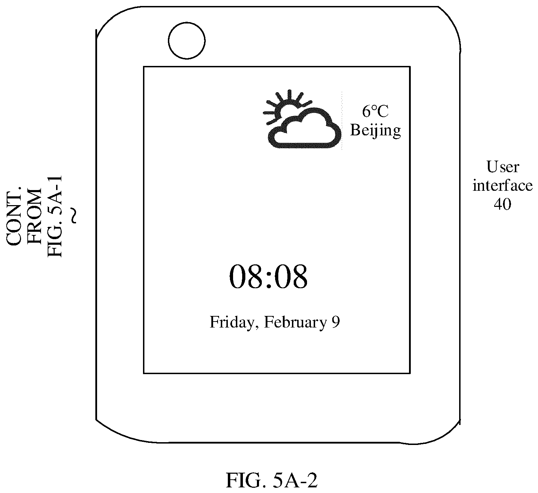

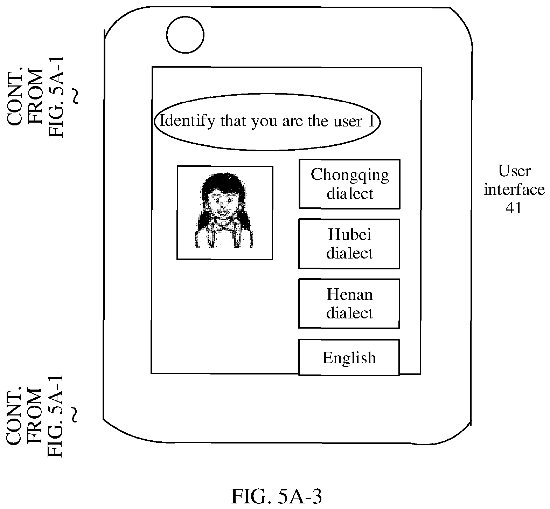

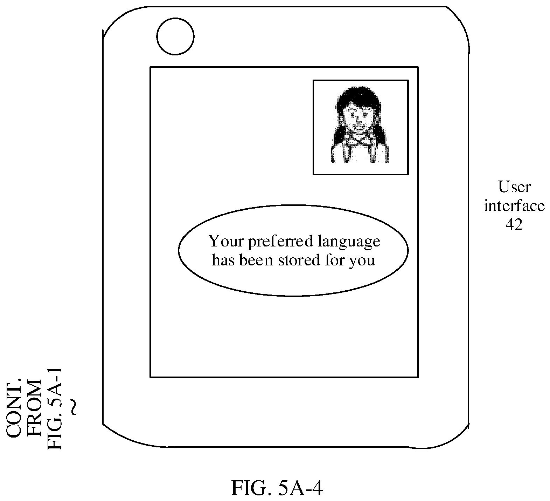

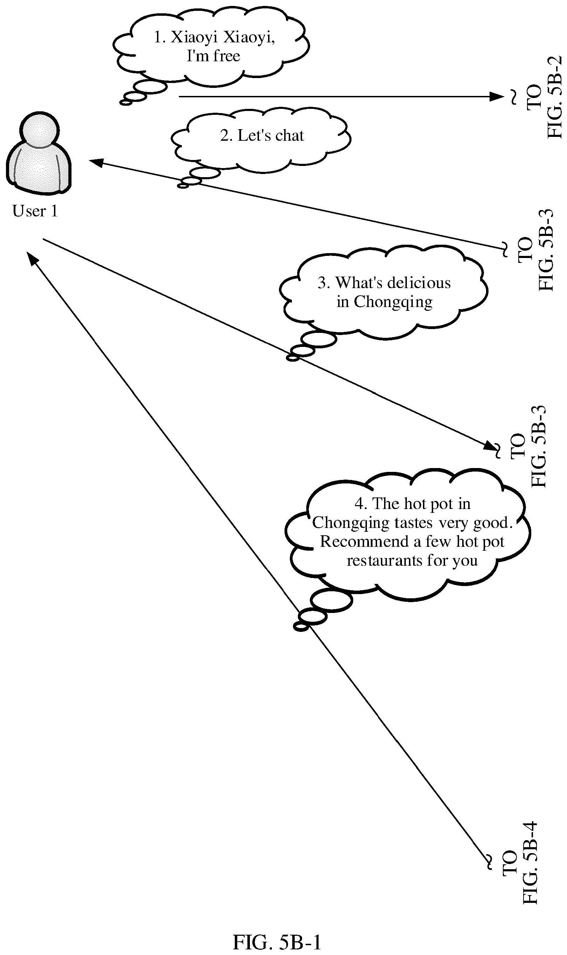

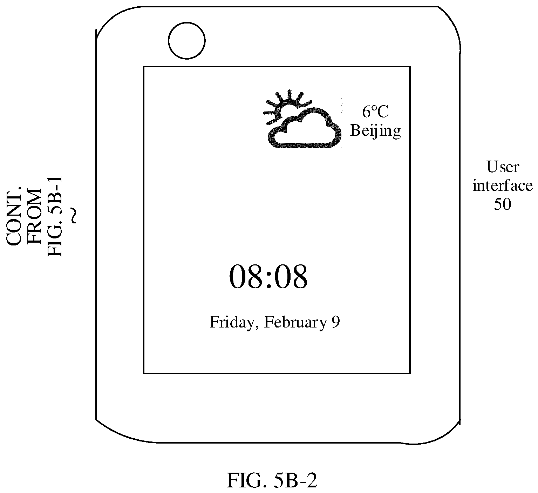

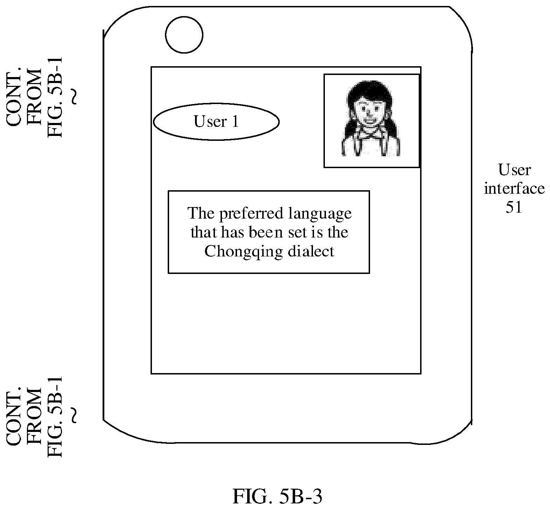

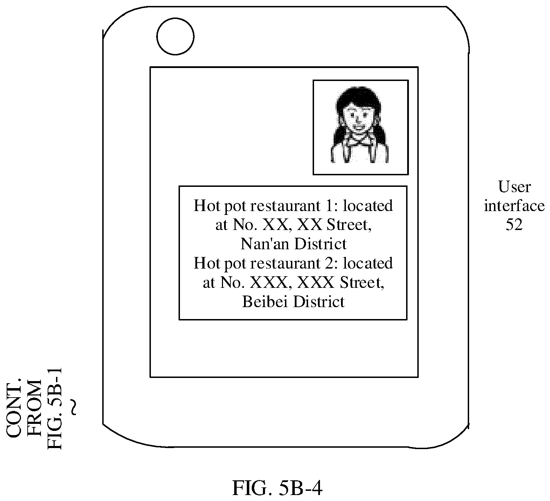

FIG. 5A-1 to FIG. 5A-4 and FIG. 5B-1 to FIG. 5B-4 are schematic diagrams of an application scenario according to an implementation of this application;
FIG. 6A-1 and FIG. 6A-2 and FIG. 6B-1 to FIG. 6B-3 are schematic diagrams of another application scenario according to an implementation of this application;

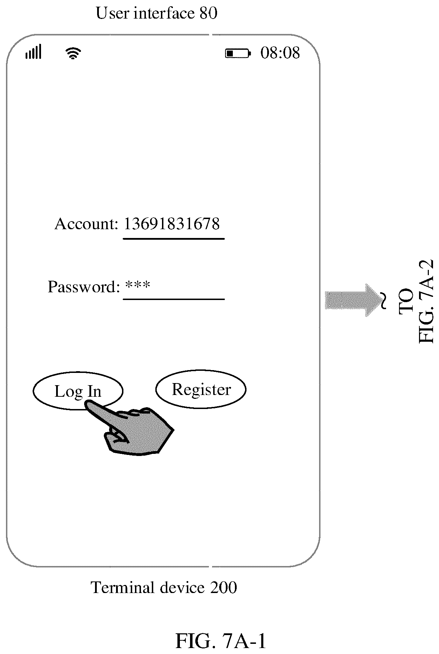

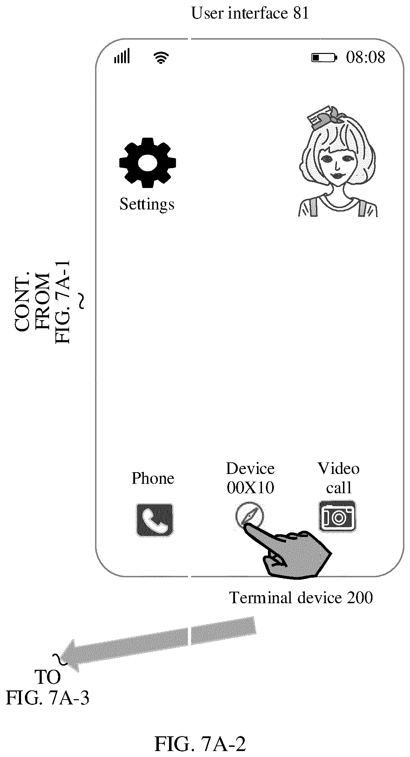

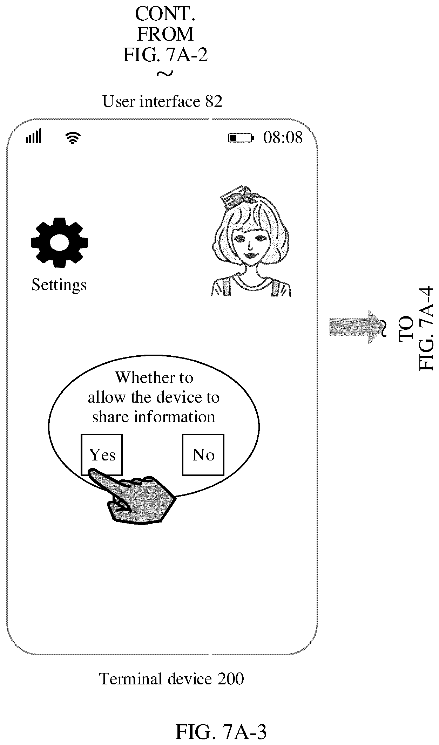

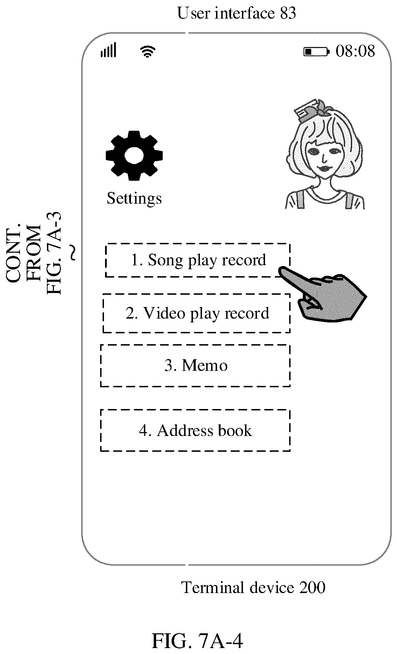

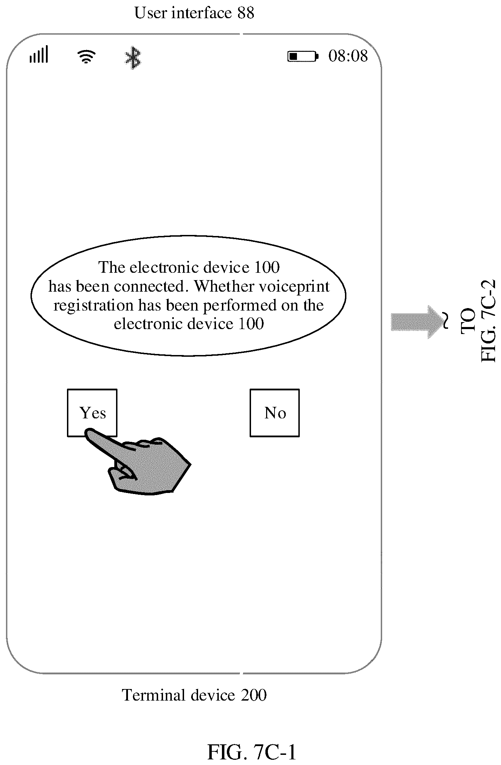

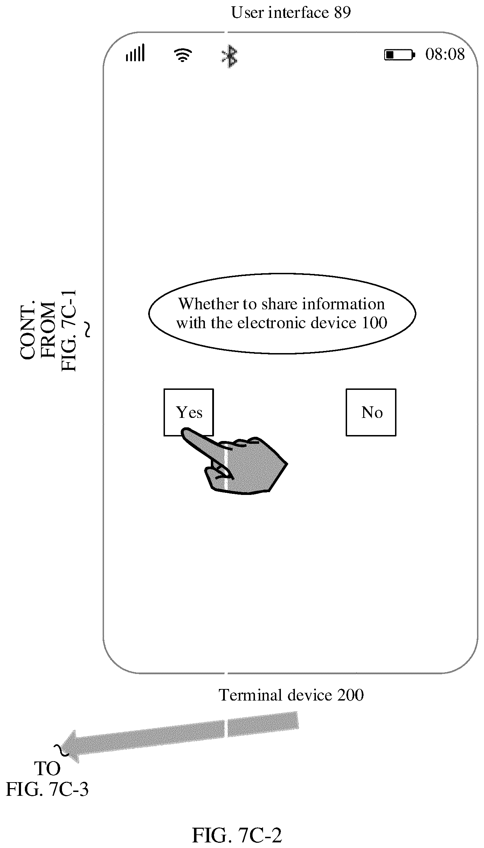

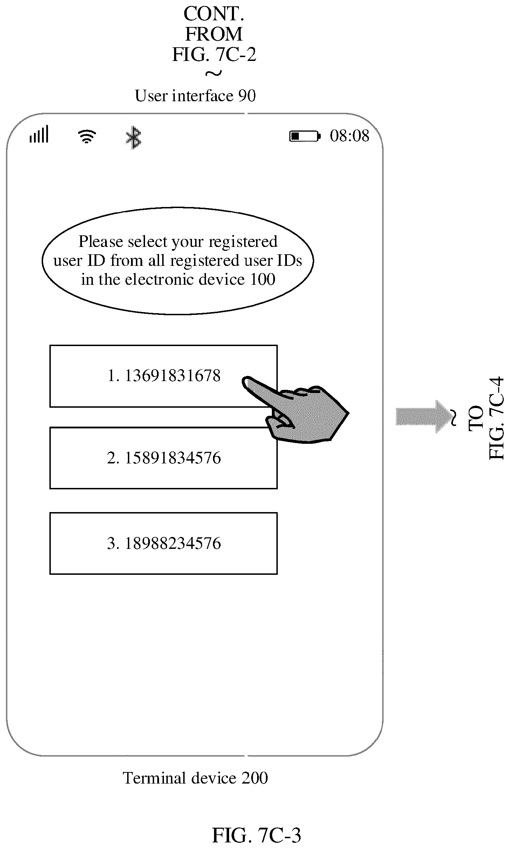

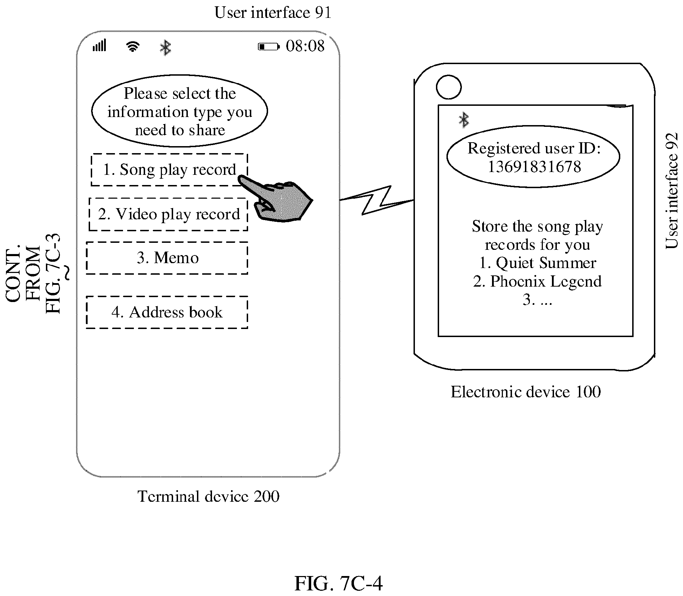

FIG. 7A-1 to FIG. 7A-4 to FIG. 7C-1 to FIG. 7C-4 are schematic diagrams of still another application scenario according to an implementation of this application;

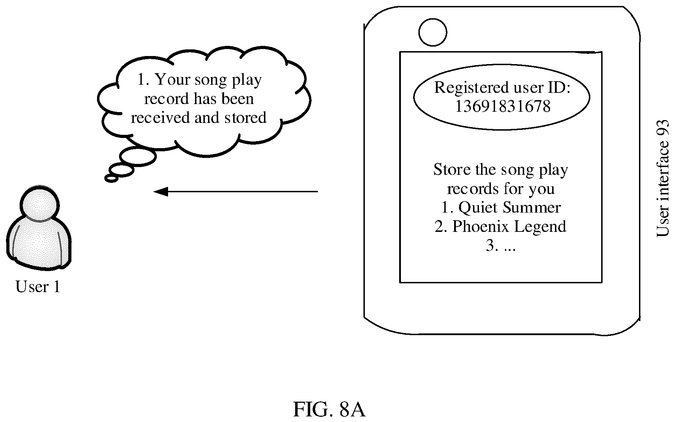

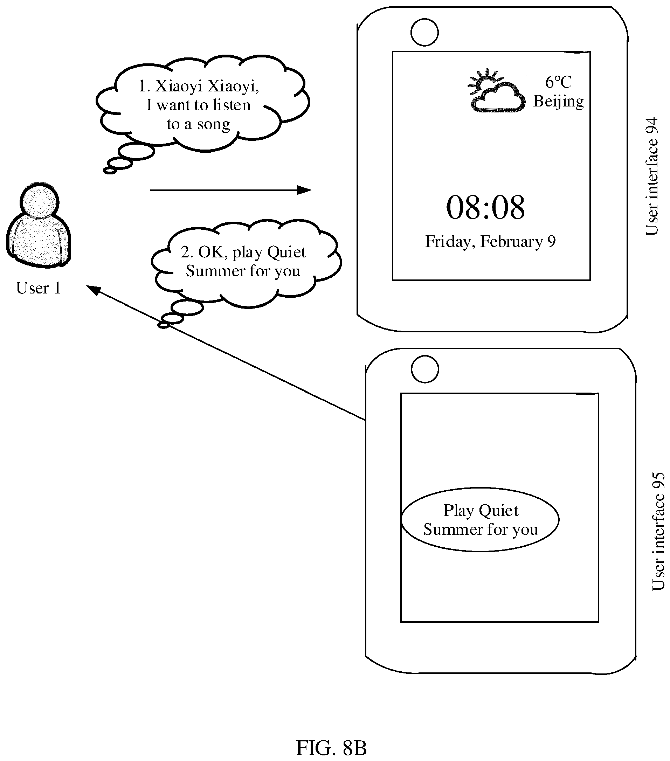

FIG. 8A and FIG. 8B are schematic diagrams of yet another application scenario according to an implementation of this application;

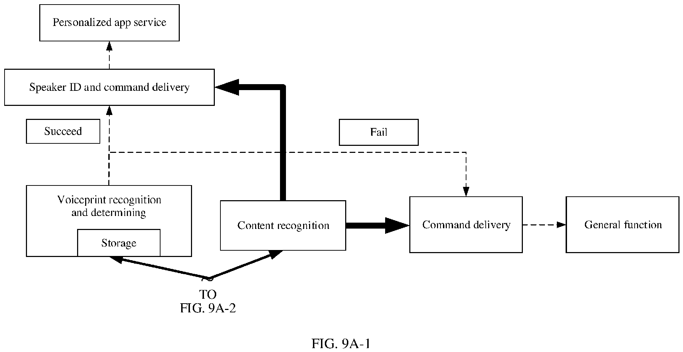

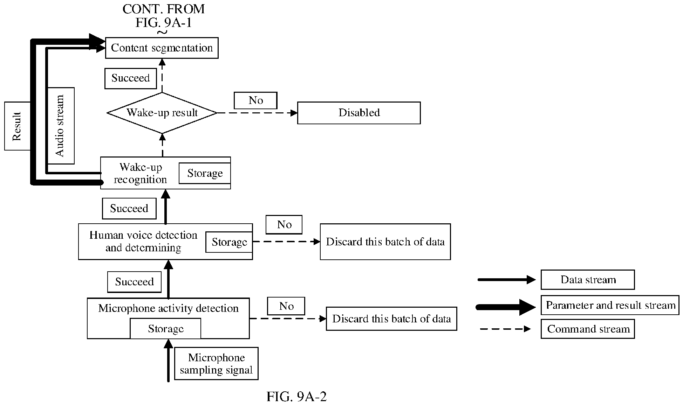

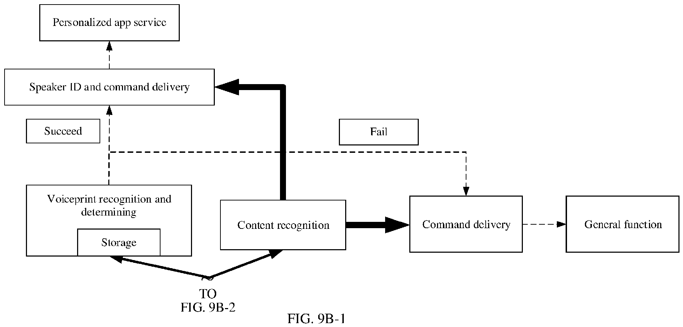

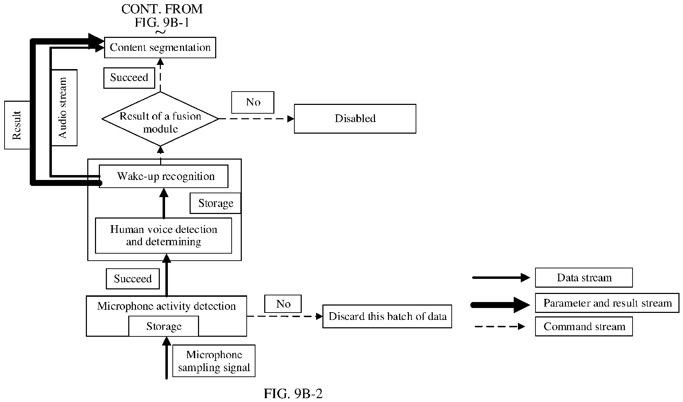

FIG. 9A-1 and FIG. 9A-2 and FIG. 9B-1 and FIG. 9B-2 are diagrams of a system architecture according to an implementation of this application;

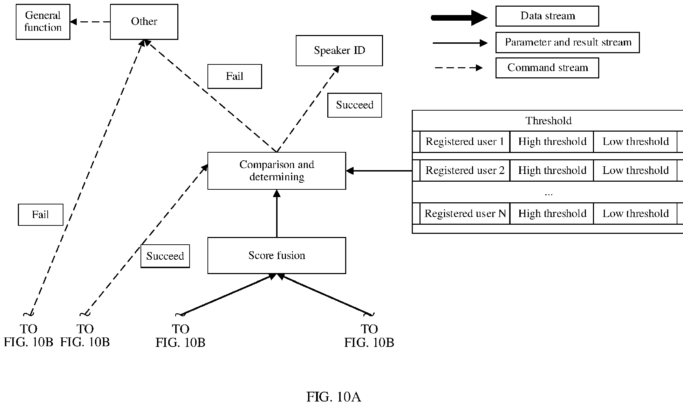

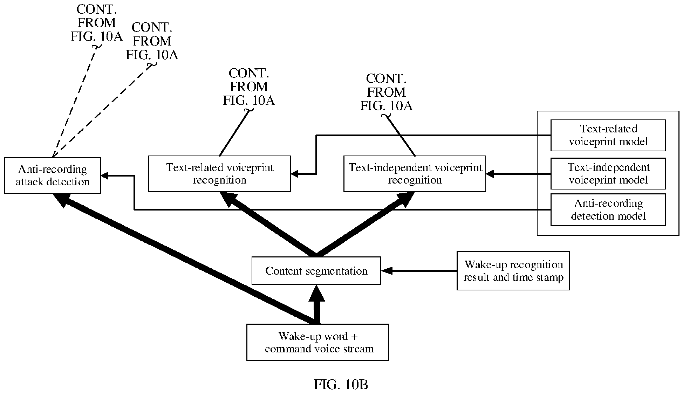

FIG. 10A and FIG. 10B are a flowchart of voiceprint recognition according to an implementation of this application;

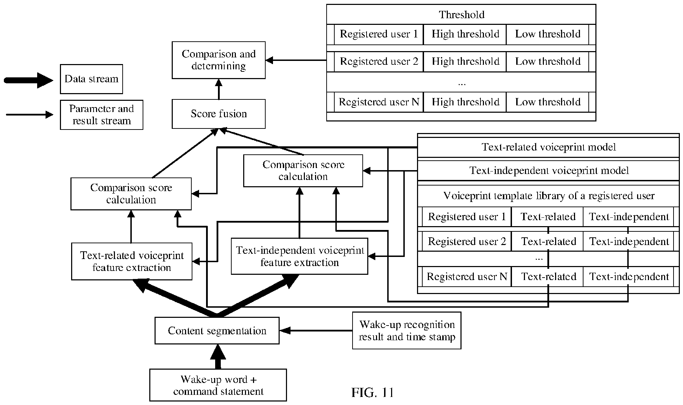

FIG. 11 is a flowchart of detailed voiceprint recognition according to an implementation of this application;

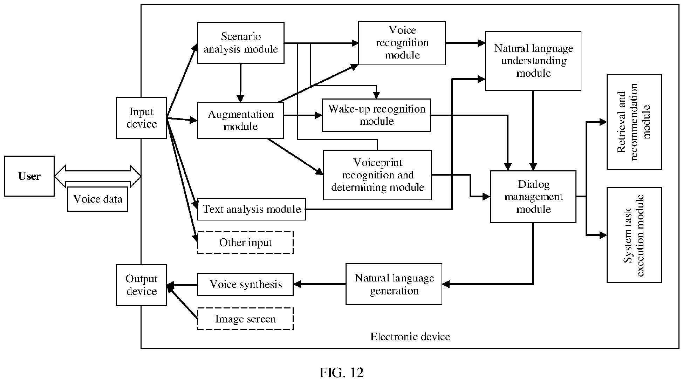

FIG. 12 is a diagram of a module of an electronic device according to an implementation of this application;

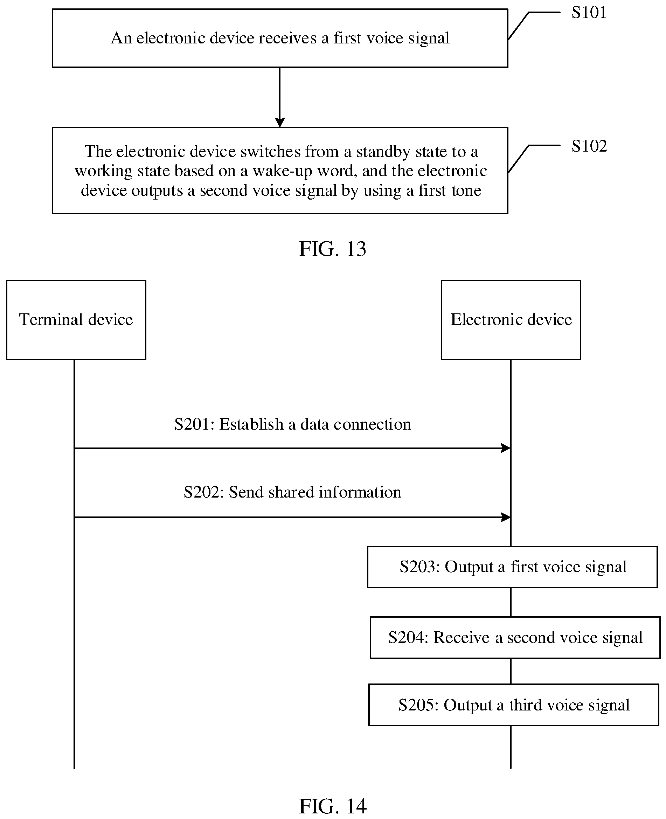

FIG. 13 is a flowchart of a voice interaction method according to an implementation of this application;
FIG. 14 is an interaction diagram of another voice interaction method according to an implementation of this application; and

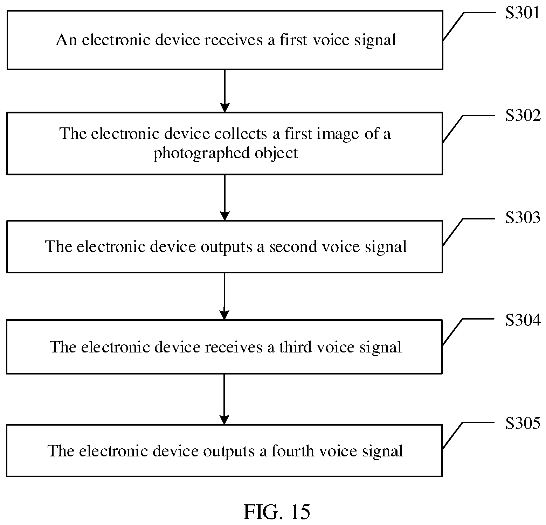

FIG. 15 is a flowchart of still another voice interaction method according to an implementation of this application.

### DESCRIPTION OF IMPLEMENTATIONS

Terms used in the following implementations of this application are merely intended to describe specific implementations, but are not intended to limit this application. The terms "one", "a", "the", "the foregoing", "this", and "the one" of singular forms used in this specification and the appended claims in this application are also intended to include plural forms, unless otherwise specified in the context clearly. It should be further understood that the term "and/or" used in this application indicates and includes any or all possible combinations of one or more listed items.

An electronic device in the implementations of this application may be applied to an open or semi-open device of a home, a group of people, or a large quantity of users, for example, a smart speaker and a smart TV at home, and a smart voice product and a tablet computer in an office. This is not limited in the implementations of this application. It may be understood that the electronic device in the implementations of this application may also be applied to a smartphone.

A terminal device in the implementations of this application may be applied to a non-open device for private use, including but not limited to a smartphone, a personal digital assistant, and the like.

Wake-up in the implementations of this application is a first step in a procedure of voice interaction between the electronic device and a user. The procedure of voice interaction between the electronic device and the user may be divided into five steps: wake-up, response, input, understanding, and feedback. Wake-up is a first contact point for each interaction between the user and the voice product, and experience of the wake-up step is crucial in the entire voice interaction procedure. Waking up the electronic device is switching the electronic device from a standby state to a working state. The electronic device can respond only after the electronic device switches from the standby state to the working state.

For the electronic device that performs voice interaction, a word for switching the electronic device from the standby state to the working state generally needs to be defined, that is, a "wake-up word" mentioned in the implementations of this application. For example, if the user needs to "ask the electronic device about weather", the user needs to activate the electronic device by calling out a "name" of the electronic device, that is, the "wake-up word", and switches the electronic device from the standby state to the working state. After the electronic device switches to the working state, the electronic device can provide feedback to a command statement other than the wake-up word input by the user. For example, if the user "asks about weather", the electronic device may answer.

In the implementations of this application, a fixed word used to wake up an electronic device is referred to as a "wake-up word", for example, "Xiaoyi Xiaoyi" or "Hello YOYO". In the implementations of this application, a non-fixed statement used to indicate an operation that needs to be performed by the electronic device is referred to as a command statement, for example, "How's the weather in Shenzhen today", "recommend me a recipe for today's noon", "I want to do exercise", or "I want to book a plane ticket".

In the implementations of this application, the electronic device collects a voice signal corresponding to a speech made by the user, and a voice signal that includes a wake-up word in the voice signal is referred to as a text-related voice signal, and a voice signal that includes a command statement in the voice signal is referred to as a text-independent voice signal. A segment of voice signal may include only a text-related voice signal, or may include both a text-related voice signal and a text-independent voice signal, or may include only a text-independent voice signal after the electronic device is woken up.

A voiceprint feature of the text-related voice signal is referred to as a text-related voiceprint feature, and a voiceprint feature of the text-independent voice signal is referred to as a text-independent voiceprint feature.

An information structure in the implementations of this application is a data structure. Information about one registered user is stored in one information structure. The information about the registered user includes an ID of the registered user, a voiceprint feature of the registered user, and personal information of the registered user. The personal information of the registered user may be information provided when the registered user performs registration, and historical information or preference information extracted in a subsequent process of using the electronic device by the registered user. The personal information of the registered user is a type of feasible information that is selected by the electronic device and that complies with privacy and security specifications, to provide a personalized service in the subsequent process of using the electronic device by the registered user. The voiceprint feature of the registered user includes a text-related voiceprint feature and a text-independent voiceprint feature of the registered user, and the text-related voiceprint feature and the text-independent voiceprint feature are extracted by the electronic device when the registered user performs voiceprint registration. For specific technical details, refer to descriptions in subsequent implementations, and details are not described herein.

Voiceprint registration in the implementations of this application is a process in which a registered user inputs an ID of the registered user into the electronic device, extracts a text-related voiceprint feature and a text-independent voiceprint feature of a registered voice signal of the registered user, and stores the text-related voiceprint feature and the text-independent voiceprint feature in the electronic device. The electronic device correspondingly stores the ID of the registered user and the text-related voiceprint feature and the text-independent voiceprint feature, to facilitate subsequent voiceprint recognition on the user. A plurality of different registered users may complete voiceprint registration on a same electronic device.

Account registration in the implementations of this application is a process in which a registered user performs registration on an application corresponding to the electronic device. The registered user inputs an account and a login password into the application corresponding to the electronic device, to complete registration.

In the implementations of this application, a registered user ID stored by one registered user in the electronic device is the same as an account registered on the terminal device. After logging in to the terminal device by using an account, the user may trigger a voiceprint registration procedure on the electronic device, and send the account to the electronic device as a registered user ID for voiceprint registration. For a specific registration procedure, refer to descriptions in subsequent implementations, and details are not described herein.

The following first describes an example of an electronic device 100 provided in the following implementations of this application.

FIG. 1 is a schematic structural diagram of an electronic device 100.

The electronic device 100 may include a processor 110, an external memory interface 120, an internal memory 121, a universal serial bus (universal serial bus, USB) interface 130, a charging management module 140, a power management module 141, a battery 142, an antenna, a wireless communications module 160, an audio module 170, a speaker 170A, a microphone 170B, a headset jack 170C, a sensor module 180, a motor 191, an indicator 192, a camera 193, a display 194, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in the implementations of this application does not constitute a specific limitation on the electronic device 100. In some other implementations of this application, the electronic device 100 may include more or fewer components than those shown in the figure, or some components may be combined, or some components may be split, or different component arrangements may be used. The components shown in the figure may be implemented by using hardware, software, or a combination of software and hardware.

The processor 110 may include one or more processing units. For example, the processor 110 may include an application processor (application processor. AP), a graphics processing unit (graphics processing unit, GPU), an image signal processor (image signal processor, ISP), a controller, a video codec, a digital signal processor (digital signal processor, DSP), and/or a neural-network processing unit (neural-network processing unit, NPU). Different processing units may be independent components, or may be integrated into one or more processors.

The controller may generate an operation control signal based on an instruction operation code and a time sequence signal, to control instruction reading and instruction execution.

A memory may be further disposed in the processor 110, and is configured to store instructions and data. In some implementations, the memory in the processor 110 is a cache memory. The memory may store instructions or data that has just been used or is cyclically used by the processor 110. If the processor 110 needs to use the instructions or the data again, the instructions or the data may be invoked directly from the memory. This avoids repeated access, and reduces a waiting time of the processor 110, thereby improving system efficiency.

In the implementations of this application, the processor 110 may be configured to perform voiceprint match between a voiceprint feature of an input voice and a voiceprint feature stored in the electronic device. For a specific procedure of performing voiceprint match by the processor 110, refer to related descriptions in subsequent implementations. Details are not described herein. In some implementations, the processor 110 may be further configured to output, to a user based on a voiceprint match result, voice information corresponding to the user.

An I2C interface is a two-way synchronization serial bus, and includes a serial data line (serial data line, SDA) and a serial clock line (serial clock line, SCL). In some implementations, the processor 110 may include a plurality of groups of I2C buses. The processor 110 may be coupled to the touch sensor 180K, a charger, a flash light, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be used to perform audio communication. In some implementations, the processor 110 may include a plurality of groups of I2S buses. The processor 110 may be coupled to the audio module 170 through the I2S bus, to implement communication between the processor 110 and the audio module 170. The PCM interface may also be used to perform audio communication, and sample, quantize, and code an analog signal. In some implementations, the audio module 170 may be coupled to the wireless communications module 160 through a PCM bus interface.

A UART interface is a universal serial data bus, and is used to perform asynchronous communication. The bus may be a bidirectional communications bus. The bus converts to-be-transmitted data between serial communication and parallel communication. In some implementations, the UART interface is usually used to connect the processor 110 to the wireless communications module 160. For example, the processor 110 communicates with a Bluetooth module in the wireless communications module 160 through the UART interface, to implement a Bluetooth function.

An MIPI interface may be used to connect the processor 110 to a peripheral component such as the display 194 or the camera 193. The MIPI interface includes a camera serial interface (camera serial interface, CSI), a display serial interface (display serial interface, DSI), and the like. In some implementations, the processor 110 communicates with the camera 193 through the CSI interface, to implement a photographing function of the electronic device 100. The processor 110 communicates with the display 194 through the DSI interface, to implement a display function of the electronic device 100.

A GPIO interface may be configured by software. The GPIO interface may be configured as a control signal or a data signal. In some implementations, the GPIO interface may be used to connect the processor 110 to the camera 193, the display 194, the wireless communications module 160, the audio module 170, the sensor module 180, and the like. The GPIO interface may alternatively be configured as the I2C interface, the I2S interface, the UART interface, the MIPI interface, or the like.

The USB interface 130 is an interface that conforms to a USB standard specification, and may be specifically a mini USB interface, a micro USB interface, a USB Type-C interface, or the like. The USB interface 130 may be used to connect to the charger to charge the electronic device 100, or may be used to transmit data between the electronic device 100 and a peripheral device. Alternatively, the interface may be used to connect to another electronic device, for example, an AR device.

It may be understood that an interface connection relationship between the modules illustrated in the implementations of this application is merely an example for description, and does not constitute a limitation on the structure of the electronic device 100. In other implementations of this application, the electronic device 100 may alternatively use an interface connection mode different from that in the foregoing implementations, or use a combination of a plurality of interface connection modes.

The charging management module 140 is configured to receive a charging input from the charger. The charger may be a wireless charger or a wired charger. In some implementations of wired charging, the charging management module 140 may receive a charging input from the wired charger through the USB interface 130. In some implementations of wireless charging, the charging management module 140 may receive a wireless charging input by using a wireless charging coil of the electronic device 100. The charging management module 140 may further supply power to the electronic device by using the power management module 141 while charging the battery 142.

The power management module 141 is configured to connect to the battery 142, the charging management module 140, and the processor 110. The power management module 141 receives an input of the battery 142 and/or an input of the charging management module 140, and supplies power to the processor 110, the internal memory 121, the display 194, the camera 193, the wireless communications module 160, and the like. The power management module 141 may be further configured to monitor parameters such as a battery capacity, a battery cycle count, and a battery health status (electric leakage or impedance). In some other implementations, the power management module 141 may alternatively be disposed in the processor 110. In some other implementations, the power management module 141 and the charging management module 140 may alternatively be disposed in a same device.

The antenna is configured to transmit and receive electromagnetic wave signals. Each antenna in the electronic device 100 may be configured to cover one or more communication frequency bands. Different antennas may be further multiplexed, to increase antenna utilization. For example, the antenna may be multiplexed as a diversity antenna of a wireless local area network. In some other implementations, the antenna may be used in combination with a tuning switch.

The wireless communications module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communications module 160 may be one or more components integrating at least one communications processor module. The wireless communications module 160 receives an electromagnetic wave through the antenna, performs frequency modulation and filtering processing on an electromagnetic wave signal, and sends a processed signal to the processor 110. The wireless communications module 160 may further receive a to-be-sent signal from the processor 110, perform frequency modulation and amplification on the signal, and convert the signal into an electromagnetic wave for radiation through the antenna.

In some implementations, the antenna of the electronic device 100 is coupled to the wireless communications module 160, so that the electronic device 100 can communicate with a network and another device by using a wireless communications technology. The wireless communications technology may include the WLAN, the NFC, the FM, and/or the IR technology.

The electronic device 100 implements a display function by using the GPU, the display 194, the application processor, and the like. The GPU is a microprocessor for image processing, and connects the display 194 to the application processor. The GPU is configured to perform mathematical and geometric calculation, and is used for graphics rendering. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some implementations, the electronic device 100 may include one or N displays 194, where N is a positive integer greater than 1.

In the implementations of this application, the display 194 may be configured to display a control, and the control may be configured to monitor an operation of unfolding a control for displaying a setting function of the electronic device, for example, a voiceprint registration operation. In response to the voiceprint registration operation, the electronic device inputs a registration procedure. For a specific registration procedure, refer to related descriptions in subsequent implementations. Details are not described herein.

The electronic device 100 may implement the photographing function by using the ISP, the camera 193, the video codec, the GPU, the display 194, the application processor, and the like.

The ISP is configured to process data fed back by the camera 193. For example, during photographing, a shutter is pressed, light is transmitted to a photosensitive element of the camera through a lens, an optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and color temperature of a photographing scenario. In some implementations, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into a standard image signal in an RGB format, a YUV format, or the like. In some implementations, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transform on frequency energy and the like.

The video codec is configured to compress or decompress a digital video. The electronic device 100 may support one or more video codecs. Therefore, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a transfer mode between human brain neurons, and may further continuously perform self-learning. Applications such as intelligent cognition of the electronic device 100 may be implemented through the NPU, for example, image recognition, facial recognition, speech recognition, and text understanding.

The external memory interface 120 may be configured to connect to an external memory card such as a micro SD card, to extend a storage capability of the electronic device 100. The external storage card communicates with the processor 110 through the external memory interface 120, to implement a data storage function. For example, files such as music and a video are stored in the external memory card.

The internal memory 121 may be configured to store computer executable program code, and the executable program code includes instructions. The internal memory 121 may include a program storage area and a data storage area. The program storage area may store an operating system, an application required by at least one function (for example, a sound playing function and an image playing function), and the like. The data storage area may store data (for example, audio data and a phone book) created in a process of using the electronic device 100, and the like. In addition, the internal memory 121 may include a high-speed random access memory, or may include a nonvolatile memory, for example, at least one magnetic disk storage device, a flash memory, or a universal flash storage (universal flash storage, UFS). The processor 110 runs the instructions stored in the internal memory 121 and/or the instructions stored in the memory disposed in the processor, to perform various function applications of the electronic device 100 and data processing.

The electronic device 100 may implement an audio function such as music playing or recording by using the audio module 170, the speaker 170A, the microphone 170B, the headset jack 170C, the application processor, and the like.

The audio module 170 is configured to convert digital audio information into an analog audio signal for output, and is also configured to convert an analog audio input into a digital audio signal. The audio module 170 may be further configured to encode and decode an audio signal. In some implementations, the audio module 170 may be disposed in the processor 110, or some function modules of the audio module 170 are disposed in the processor 110.

The speaker 170A is configured to convert an audio electric signal into a sound signal. The electronic device 100 may listen to music or listen to voice information fed back by the electronic device by using the speaker 170A.

The microphone 170B is configured to convert a sound signal into an electric signal. When the user makes a sound, the microphone 170B collects the sound signal. At least one microphone 170B may be disposed in the electronic device 100. In some other implementations, two microphones 170B may be disposed in the electronic device 100, to implement a noise reduction function in addition to collecting a sound signal. In some other implementations, three, four, or more microphones 170B may alternatively be disposed in the electronic device 100, to collect a sound signal and implement noise reduction, and further identify a sound source and implement a directional recording function.

The headset jack 170D is configured to connect to a wired headset. The headset jack 170D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some implementations, the pressure sensor 180A may be disposed on the display 194. There are many types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on a change of the capacitance. When a touch operation is performed on the display 194, the electronic device 100 detects intensity of the touch operation by using the pressure sensor 180A. The electronic device 100 may also calculate a touch location based on a detection signal of the pressure sensor 180A.

The gyro sensor 180B may be configured to determine a motion posture of the electronic device 100. In some implementations, an angular velocity of the electronic device 100 around three axes (namely, axes x, y, and z) may be determined by using the gyro sensor 180B. The gyro sensor 180B may be configured to implement image stabilization during photographing. For example, when the shutter is pressed, the gyro sensor 180B detects an angle at which the electronic device 100 shakes, and calculates, based on the angle, a distance for which a lens module needs to compensate, so that the lens cancels the shake of the electronic device 100 through reverse motion, thereby implementing image stabilization. The gyro sensor 180B may be further used in a navigation scenario and a motion-sensing game scenario.

The barometric pressure sensor 180C is configured to measure barometric pressure. In some implementations, the electronic device 100 calculates an altitude by using a barometric pressure value measured by the barometric pressure sensor 180C, to assist in positioning and navigation.

The magnetic sensor 180D includes a Hall effect sensor. The electronic device 100 may detect opening/closing of a clamshell leather case by using the magnetic sensor 180D. In some implementations, when the electronic device 100 is a clamshell phone, the electronic device 100 may detect opening/closing of a clamshell by using the magnetic sensor 180D. Further, a feature such as automatic unlocking upon opening of the flip cover is set based on a detected opening or closing state of the leather case or a detected opening or closing state of the flip cover.

The acceleration sensor 180E may detect a magnitude of an acceleration of the electronic device 100 in each direction (usually, three axes). When the electronic device 100 is still, a magnitude and a direction of gravity may be detected. The acceleration sensor 180E may be further configured to identify a posture of the electronic device, and is used in an application such as switching between a landscape mode and a portrait mode or a pedometer.

The distance sensor 180F is configured to measure a distance. The electronic device 100 may measure the distance in an infrared or a laser manner. In some implementations, in a photographing scenario, the electronic device 100 may measure a distance through the distance sensor 180F, to implement quick focusing.

The optical proximity sensor 180G may include, for example, a light-emitting diode (LED) and an optical detector such as a photodiode. The light-emitting diode may be an infrared light-emitting diode. The electronic device 100 emits infrared light by using the light emitting diode. The electronic device 100 detects, by using the photodiode, infrared reflected light that comes from a nearby object. When detecting sufficient reflected light, the electronic device 100 may determine that there is an object near the electronic device 100. Alternatively, when detecting insufficient reflected light, the electronic device 100 may determine that there is no object near the electronic device 100.

The ambient light sensor 180L is configured to sense ambient light brightness. The electronic device 100 may adaptively adjust luminance of the display 194 based on the sensed luminance of the ambient light.

The fingerprint sensor 180H is configured to collect a fingerprint.

The temperature sensor 180J is configured to detect a temperature. In some implementations, the electronic device 100 executes a temperature processing policy based on the temperature detected by the temperature sensor 180J. For example, when temperature reported by the temperature sensor 180J exceeds a threshold, the electronic device 100 degrades performance of a processor near the temperature sensor 180J, to reduce power consumption and implement thermal protection. In some other implementations, when temperature is lower than another threshold, the electronic device 100 heats up the battery 142, to avoid abnormal shutdown of the electronic device 100 due to low temperature. In some other implementations, when temperature is lower than still another threshold, the electronic device 100 boosts an output voltage of the battery 142 to avoid abnormal shutdown due to low temperature.

The touch sensor 180K is also referred to as a "touch panel". The touch sensor 180K may be disposed on the display 194, and the touch sensor 180K and the display 194 constitute a touchscreen, which is also referred to as a "touch screen".

The bone conduction sensor 180M may obtain a vibration signal.

The motor 191 may generate a vibration prompt. The motor 191 may be used for touch vibration feedback. For example, touch operations performed on different applications (for example, photographing and audio playing) may correspond to different vibration feedback effects. The motor 191 may also correspond to different vibration feedback effects for touch operations performed on different areas of the display 194.

The indicator 192 may be an indicator light, and may be configured to indicate a charging status and a power change, or may be configured to indicate a message, a missed call, a notification, and the like.

The following describes some example user interfaces (user interface, UI) provided by the electronic device 100 and some example processes of voice interaction between the electronic device 100 and a user. The term "user interface" in the specification, claims, and accompanying drawings of this application is a medium interface for interaction and information exchange between an application or an operating system and a user, and implements conversion between an internal form of information and a form that can be accepted by the user. The user interface is usually in a representation form of a graphical user interface (graphic user interface, GUI), which is a user interface that is related to a computer operation and that is displayed in a graphical manner. The graphical user interface may be an interface element such as an icon, a window, or a control displayed on the display of the electronic device 100. Voice interaction between the electronic device 100 and the user means that, after the user makes a sound, the electronic device 100 collects a voice signal of the user, performs content parsing and voiceprint recognition on the voice signal, and specifically outputs a voice signal that includes content that meets a requirement of the user. It may be understood that the electronic device 100 may not include a terminal screen, and content information displayed by the electronic device 100 may be played by the electronic device 100 in a voice manner.

The electronic device 100 in this application may not only provide a smart voice service for a registered user, but also provide a voice service for a non-registered user. If the electronic device 100 provides a smart voice service for a registered user, the electronic device 100 collects a voice signal of the user, performs voiceprint recognition on the collected voice signal, determines a registered user ID (identification) corresponding to the user, and obtains personal information that corresponds to the registered user ID and that is stored in the electronic device 100. The personal information includes but is not limited to a preferred dialect, a favorite song, specified health information, and the like of the registered user ID. Content recognition is performed on the voice signal, to determine an operation that needs to be performed by the electronic device 100. For example, the electronic device 100 needs to play a song. Further, a personalized service is specifically provided for the user based on the obtained personal information corresponding to the registered user ID and the operation that needs to be performed by the electronic device 100. If the electronic device 100 provides a voice service for a non-registered user, the electronic device 100 provides a common service according to a normal setting.

The following describes several manners of performing voiceprint registration on the electronic device 100 provided in the implementations of this application.

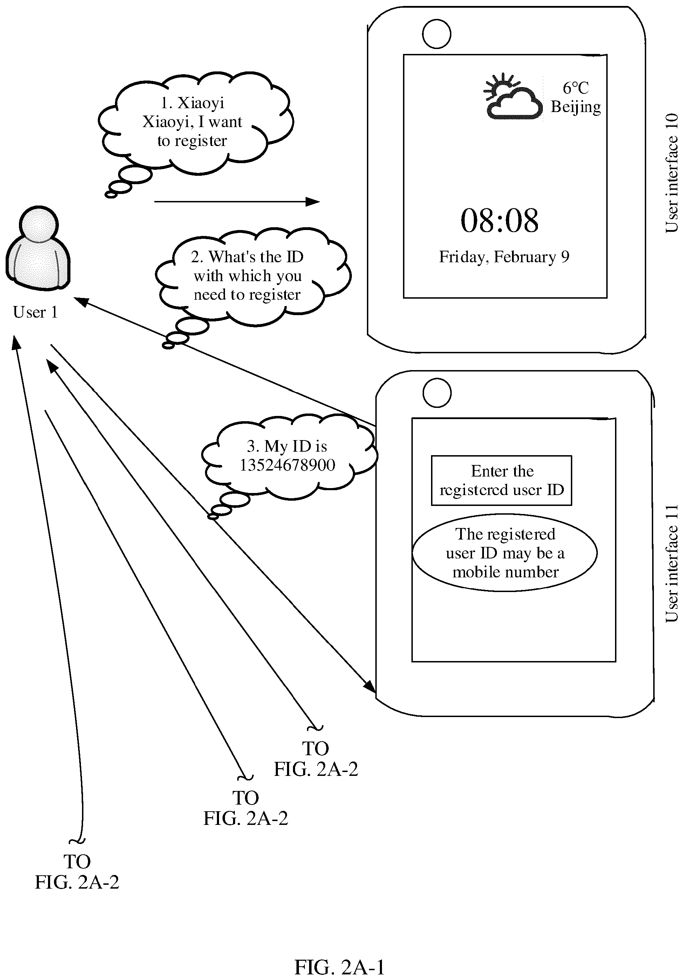

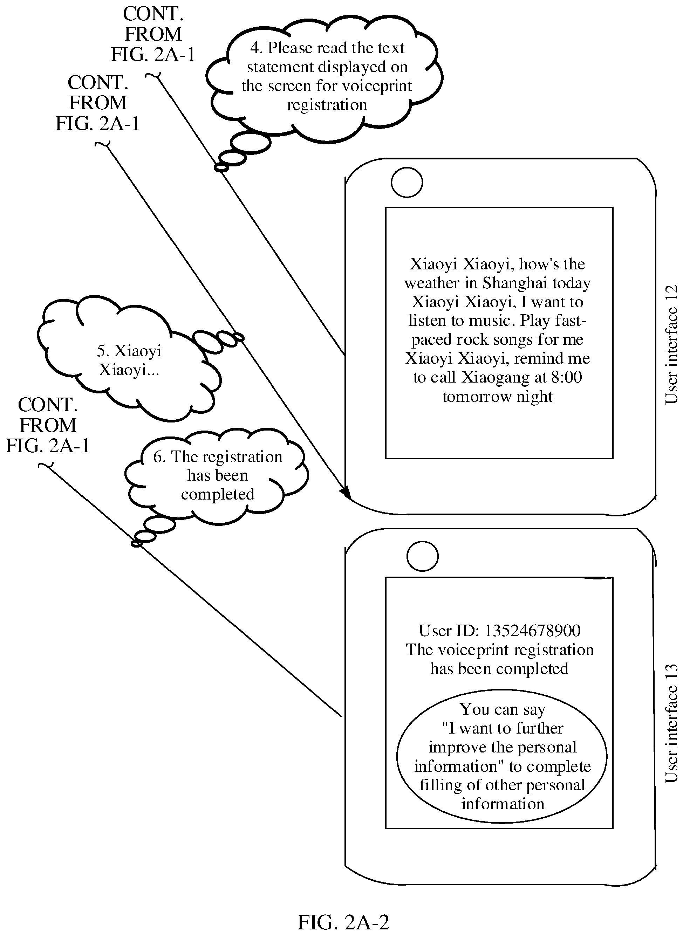

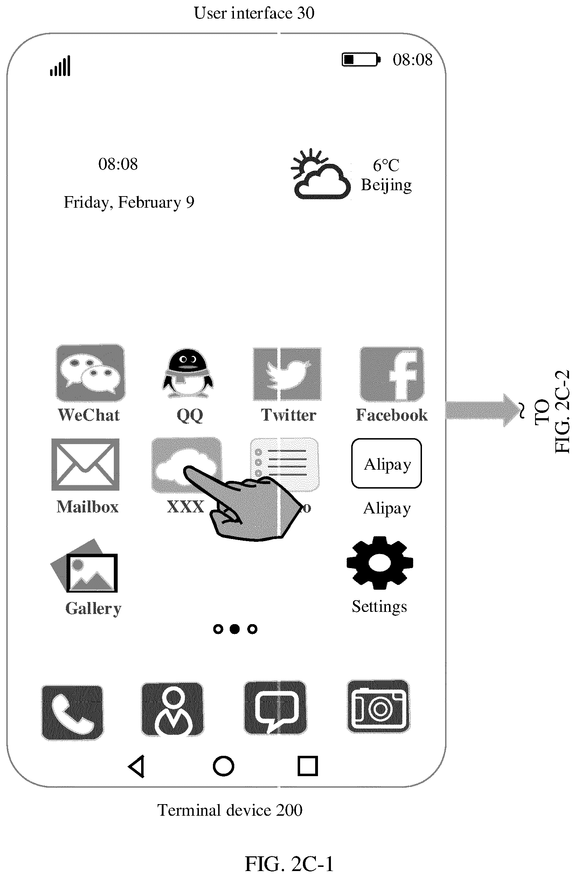

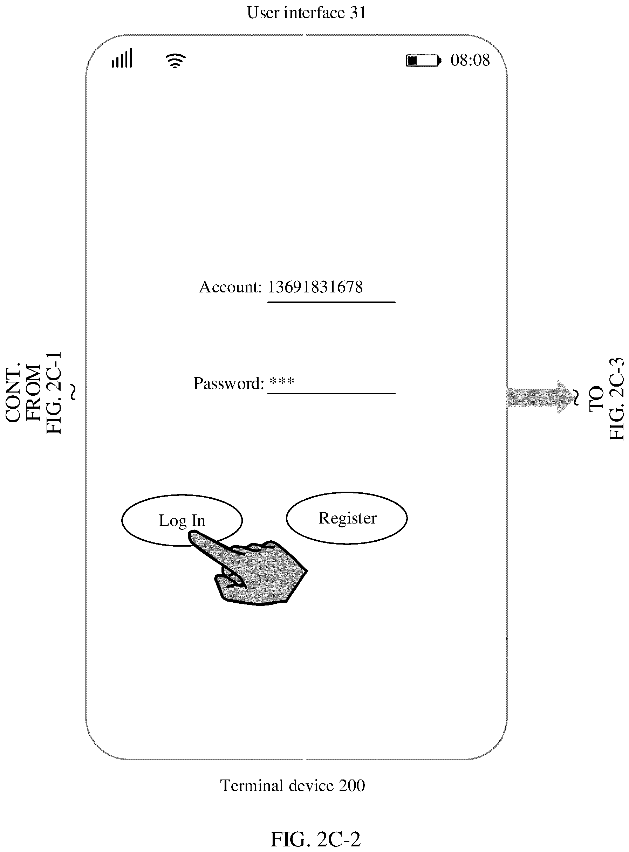

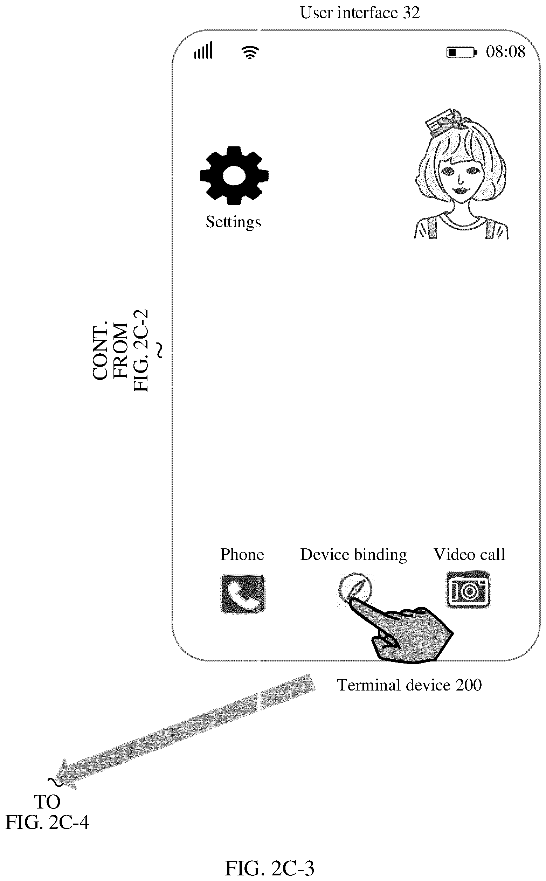

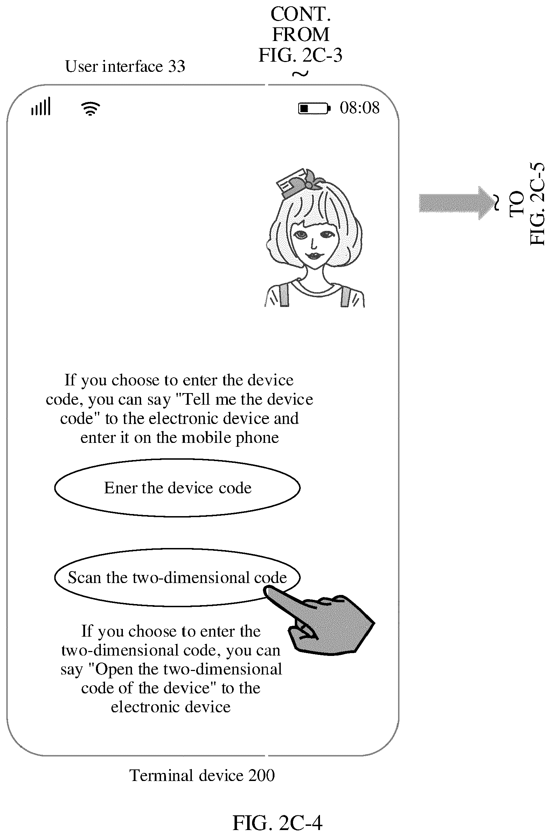

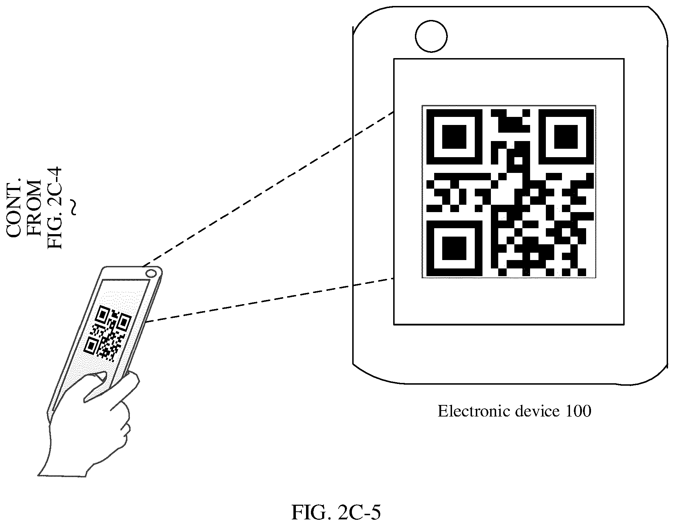

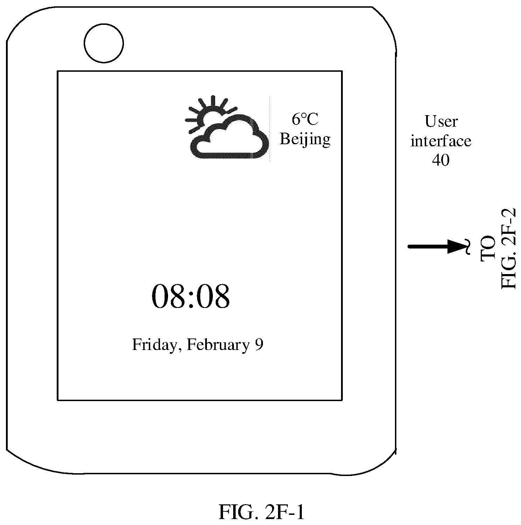

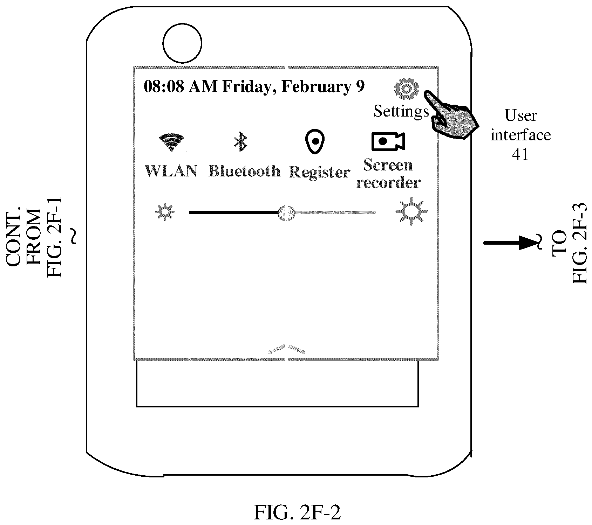

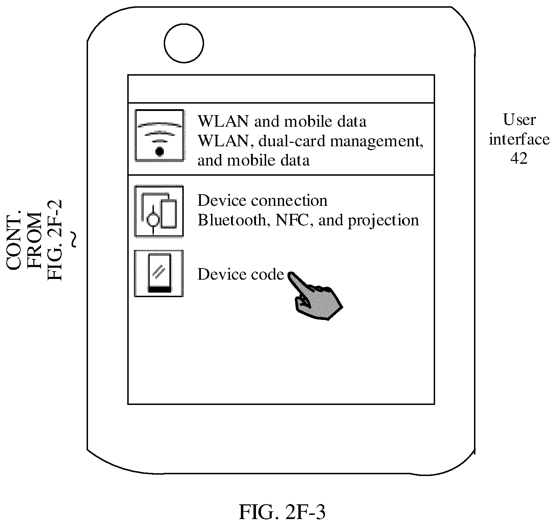

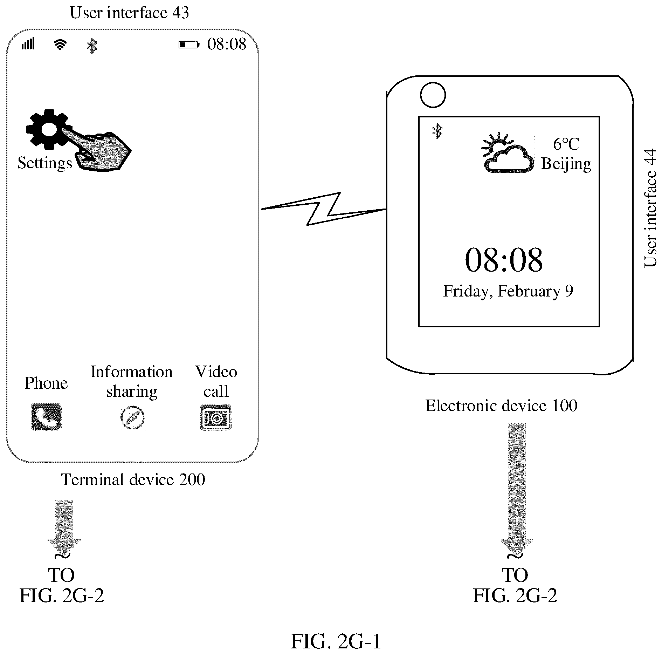

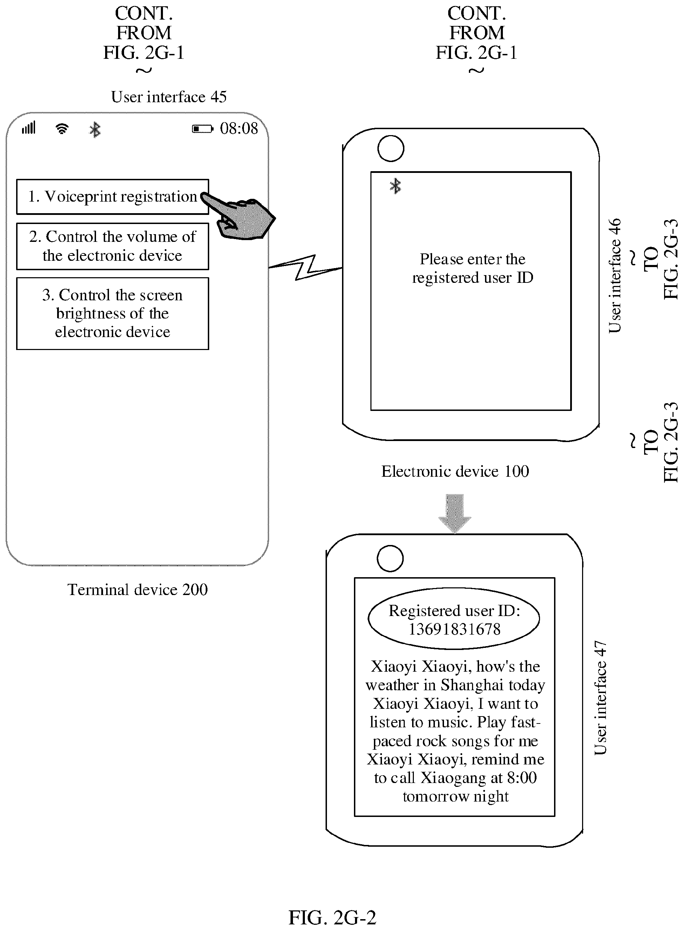

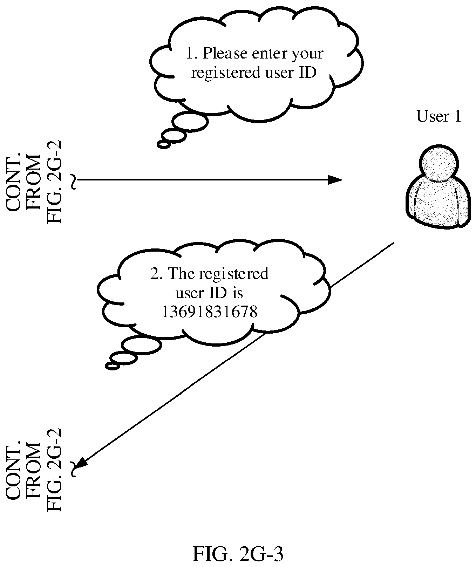

FIG. 2A-1 and FIG. 2A-2 are an example of a voice interaction diagram and a user interface diagram of voiceprint registration on the electronic device 100. As shown in the figure, when the electronic device is in a standby state, that is, a user interface 10 in FIG. 2A-1 and FIG. 2A-2, a user is a user 1. If the user 1 needs to perform registration, the user 1 may output an utterance 1 "Xiaoyi Xiaoyi, I want to register". It should be noted that content information of the utterance 1 may not be limited to "Xiaoyi Xiaoyi, I want to register", but may be other utterance content information, for example, "Xiaoyi Xiaoyi, I want to register", "Xiaoyi Xiaoyi, I need to register", and "Xiaoyi Xiaoyi, start a registration procedure". This is not limited in the implementations of this application. "Xiaoyi Xiaoyi" is a wake-up word, and is used to wake up the electronic device. To be specific, when detecting that a voice signal corresponding to the utterance 1 includes the wake-up word, the electronic device changes from the standby state to a working state. "I want to register" is a command statement, and the command statement is used to indicate operations that need to be performed by the electronic device, that is, the electronic device performs content recognition on a text-independent voice signal in the voice signal corresponding to the utterance 1, and determines that a registration procedure needs to be started.

The electronic device starts the registration procedure, displays a user interface 11, and outputs an utterance 2 "What's the registered user ID with which you need to register". The registered user ID is a user identifier, and is used to uniquely identify a registered user. A purpose of the utterance 2 is to prompt the user to input the registered user ID. Specific utterance content is not limited in this application, for example, "What's your ID".

The user continues to respond with an utterance 3 "My registered user ID is 13524678900". The electronic device performs content recognition on a voice signal corresponding to the utterance 3, obtains and stores the registered user ID, displays a user interface 12, and outputs an utterance 4 "Please read the text statement displayed on the screen for voiceprint registration".

When the user starts to read the text statement displayed on the screen, that is, the user answers with an utterance 5 "Xiaoyi Xiaoyi, how's the weather in Shanghai today...", the electronic device collects a registered voice signal corresponding to the utterance 5, and extracts a voiceprint feature of the registered voice signal as a voiceprint feature corresponding to the registered user ID. The voiceprint feature includes a text-related voiceprint feature and a text-independent voiceprint feature. For a method for extracting the voiceprint feature of the registered voice signal by the electronic device, refer to descriptions in subsequent implementations. Details are not described herein. In the implementations of this application, a voice signal used to extract a voiceprint feature of a registered user is referred to as a registered voice signal.

The electronic device completes voiceprint registration of the user, that is, the electronic device completes voiceprint registration after successfully storing a correspondence between the registered user ID and the voiceprint feature, and displays a user interface 13. In addition, the electronic device outputs an utterance 6 "Voiceprint registration has been completed, and you can further improve personal information". For example, the user may further improve a gender, an age, and a hobby of the user. The electronic device correspondingly stores the personal information of the user, the registered user ID, and the voiceprint feature, for example, by using an information structure. The information structure is a data structure. For details, refer to descriptions in subsequent implementations. Details are not described herein.

FIG. 2B-1 to FIG. 2B-3 are an example of another voice interaction diagram and another user interface diagram of user registration on the electronic device 100. As shown in the figure, when the electronic device 100 is in a standby state, that is, the electronic device 100 displays a user interface 20 in FIG. 2B-1 to FIG. 2B-3, a user may make a downward slide gesture on a status bar of a display of the electronic device 100 to open a window, and may tap an on-off control of "Register" in the window to start a registration procedure conveniently. A representation form of the on-off control of "Register" may be text information and/or an icon.

When the electronic device detects a downward slide gesture on the status bar, in response to the gesture, the electronic device 100 displays a user interface 21, that is, displays a window on the user interface 20 in superimposed mode. The window may display an on-off control of "Register", and may further display an on-off control of another function (for example, Wi-Fi, Bluetooth, or screen recording). When an operation is detected on the on-off control of "Register" in the window (for example, a touch operation on the on-off control of "Register"), in response to the operation, the electronic device 100 may start a registration procedure.

The electronic device displays a user interface 22, and outputs an utterance 1 "What's the ID with which you need to register". The user answers with an utterance 2 "My ID is 13524678900". The electronic device performs content recognition on content information of the utterance 2, obtains and stores the registered user ID, displays a user interface 23, and outputs an utterance 4 "Please read the text statement displayed on the screen for voiceprint registration". For a subsequent registration procedure, refer to the descriptions in the implementation in FIG. 2A-1 and FIG. 2A-2. Details are not described herein again.

FIG. 2C-1 to FIG. 2C-5 to FIG. 2E are an example of still another voice interaction diagram and still another user interface diagram of voiceprint registration on the electronic device 100. In the implementations, a user may trigger a voiceprint registration procedure on a terminal device 200, to further complete voiceprint registration on the electronic device 100. The terminal device 200 may include but is not limited to a smartphone, a personal digital assistant, or the like. In the implementations, the electronic device 100 and the terminal device 200 may be connected over the internet.

Before the user performs voiceprint registration, as shown in FIG. 2C-1 to FIG. 2C-5, binding between the electronic device 100 and the terminal device 200 that is implemented on the terminal device 200 is first described in the implementations of this application. It may be understood that FIG. 2C-1 to FIG. 2C-5 shows examples of some user interface implementations, and does not constitute a limitation on the implementation of this application. A procedure of binding between the electronic device 100 and the terminal device 200 may further include another user interface.

A user interface 30 shows an example of an icon that is on the terminal device 200 and that is used to display an application installed on the terminal device 200. The icon of the application may include but is not limited to: an icon of WeChat (WeChat), an icon of QQ, an icon of Twitter (Twitter), an icon of Facebook (Facebook), an icon of Mailbox, an icon of XXX (that is, an icon of an application corresponding to the electronic device 100 mentioned in the implementations of this application), an icon of Memo, an icon of Alipay, an icon of Gallery, and an icon of Settings. Icons of other applications may be distributed on a plurality of pages. The user interface 30 shown as an example in FIG. 2C-1 to FIG. 2C-5 may be a home screen (Home screen).

The XXX application is an application provided or developed by a manufacturer of an electronic device, and is installed on a terminal device that is not the electronic device, to implement information exchange between the terminal device and the electronic device. The manufacturer of the electronic device may include a manufacturer, a supplier, a provider, an operator, or the like of the electronic device. The manufacturer may be a manufacturer that uses a self-made or purchased part and a raw material to manufacture the electronic device. The supplier may be a manufacturer that provides an entire machine, a raw material, or a part of the electronic device. The operator may be a manufacturer responsible for distribution of the electronic device.

When the terminal device 200 detects an operation performed on the icon of XXX, the terminal device 200 displays a user interface 31 in response to the operation. The user interface 31 displays a login or registration interface of the XXX application. If the user has not registered an account in the XXX application, the user taps a control of "Register", and performs account registration according to an account registration procedure. Optionally, the account may be a phone number.

If the user completes the registration procedure in the XXX application, the user may input a login account 13691831678 and a password on the user interface 31, and then perform an operation on a control of "Log in", for example, a tap operation. The terminal device 200 displays a user interface 32 in response to the operation. The user interface 32 displays a control of "Settings", a control of "Phone", a control of "Device binding", and a control of "Video call", and may further display an avatar previously set by the user.

The user may perform an operation on the control of "Device binding" on the user interface 32. The terminal device 200 displays a user interface 33 in response to the operation. The user interface 33 displays a control of "Enter a device code" and a control of "Scan a two-dimensional code", that is, the user may complete binding between the terminal device 200 and the electronic device 100 by inputting a device code or scanning a two-dimensional code of the electronic device. The two-dimensional code includes the device code of the electronic device 100.

The device code is used to uniquely identify the electronic device. Optionally, the device code may be a unique device code that is applied to a server when the electronic device 100 accesses a network for the first time and that is allocated by the server to the electronic device 100. Optionally, the device code may be a unique device code that is disposed in the electronic device 100 when the electronic device 100 is delivered from a factory. When the electronic device 100 accesses a network for the first time, the electronic device 100 sends the device code of the electronic device 100 to a server, to automatically complete device registration of the electronic device 100 with the server. Optionally, the two-dimensional code including the device code of the electronic device 100 may be generated by a server according to a preset rule based on the device code of the electronic device 100, and delivered to the electronic device 100.

If the user selects the manner of inputting a device code on the user interface 33 to complete binding between the electronic device 100 and the terminal device 200, optionally, the user may output an utterance "Please tell me the device code" to the electronic device. In this case, the electronic device 100 may output the device code of the electronic device 100 in a voice manner, and/or the electronic device 100 displays the device code of the electronic device 100.

Alternatively, as shown in FIG. 2F-1 to FIG. 2F-3, a manner in which the user obtains the device code of the electronic device 100 may be as follows: The user may make a downward slide gesture on a status bar of a display of a user interface 40 in FIG. 2F-1 to FIG. 2F-3 to open a window. For example, as shown in a user interface 41, the user may tap an on-off control of "Settings" in the window. The electronic device 100 displays a user interface 42 in response to an operation on the on-off control of "Settings". The user interface 42 includes a control of "Device code". If the user performs an operation on the control of "Device code", the electronic device 100 outputs the device code in response to the operation on the control of "Device code".

If the user selects the manner of scanning a two-dimensional code on the user interface 33 to complete binding between the electronic device 100 and the terminal device 200, the user may output an utterance "Open the device two-dimensional code" to the electronic device. In this case, in response to the utterance, the electronic device 100 outputs the two-dimensional code including the device code. The user may scan the two-dimensional code by using the terminal device 200. For a manner in which the electronic device obtains the two-dimensional code, refer to the descriptions in the foregoing implementations.

Alternatively, as shown in FIG. 2F-1 to FIG. 2F-3, if the user performs an operation on the control of "Device code" on the user interface 42, in response to the operation on the control of "Device code", the electronic device 100 outputs the two-dimensional code including the device code.

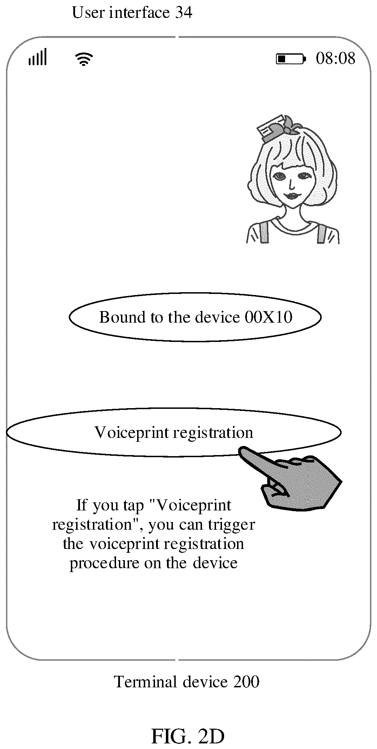

Binding between the terminal device 200 and the electronic device 100 is completed according to the binding procedure in FIG. 2C-1 to FIG. 2C-5. As shown in FIG. 2D, the terminal device 200 displays a user interface 34. The user interface 34 includes a control of "Voiceprint registration", and outputs prompt information "If voiceprint registration is tapped, a voiceprint registration procedure on the electronic device 100 may be triggered".

The user performs an operation on the control of "Voiceprint registration". The terminal device 200 sends a first voiceprint registration request to the server in response to the operation on the control of "Voiceprint registration". The first voiceprint registration request includes an account 13691831678 for logging in to the terminal device 200 and a device code of the electronic device 100 bound to the terminal device 200. The server sends a second voiceprint registration request to the electronic device 100 identified by the device code. The second voiceprint registration request includes the account 13691831678 for logging in to the terminal device 200.

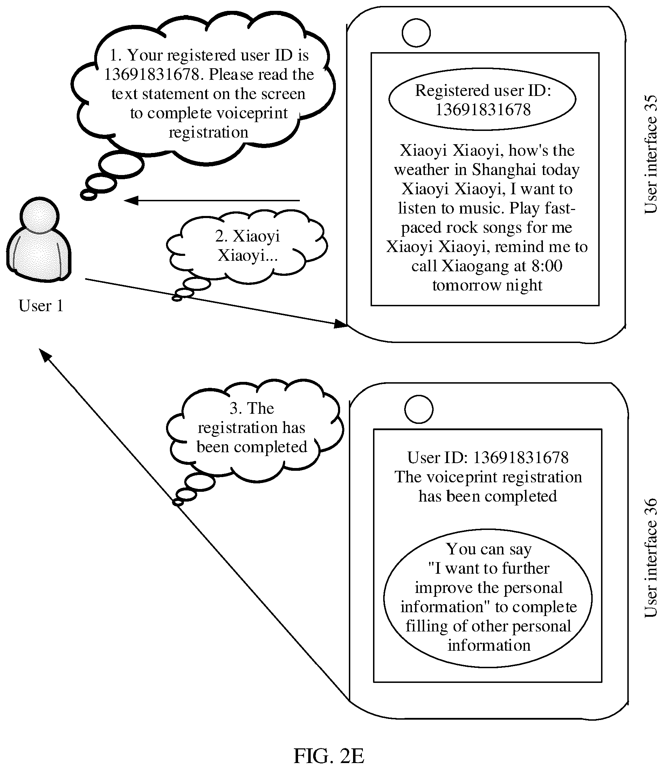

As shown in FIG. 2E, the electronic device 100 receives the second voiceprint registration request, and in response to the second voiceprint registration request, outputs an utterance 1 "Your registered user ID is 13691831678. Please read the text statement on the screen to complete voiceprint registration". The electronic device 100 displays a user interface 35. If the registered user ID is the same as a registered user ID stored in the electronic device 100, the electronic device 100 may output prompt information "Voiceprint registration has been completed for the registered user ID. Please do not repeat the voiceprint registration".

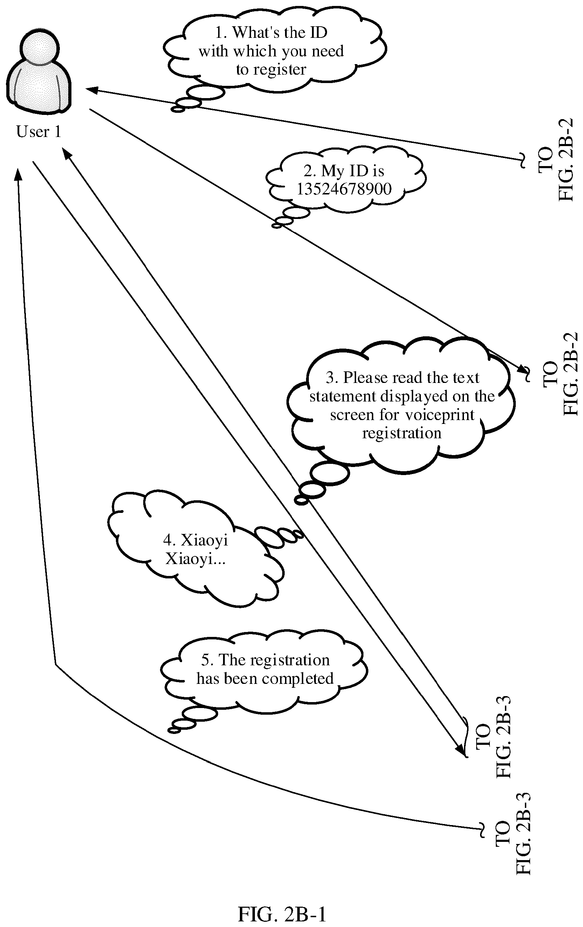

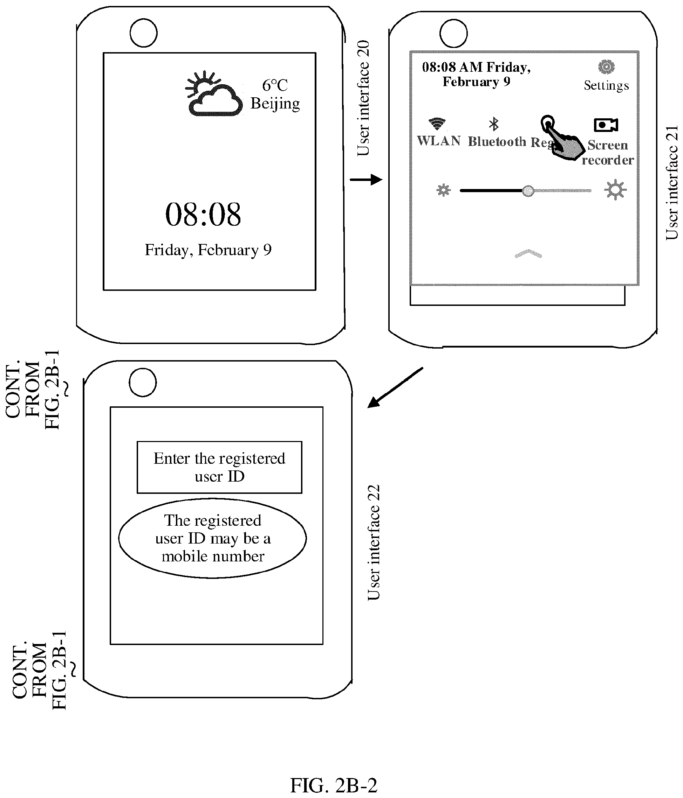

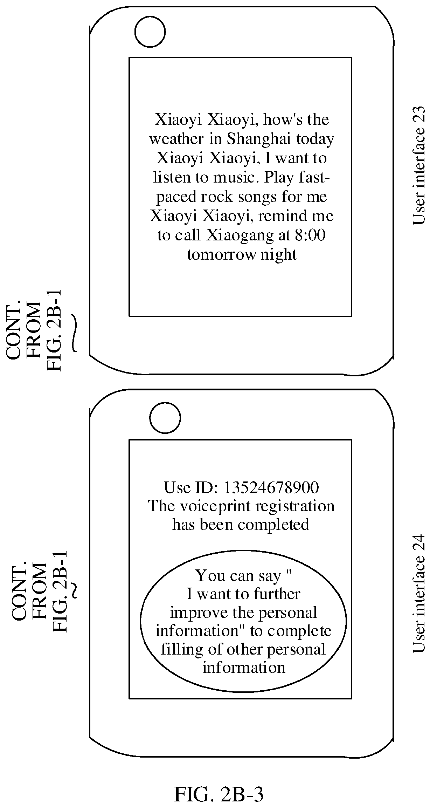

The user may further read the text statement displayed on the screen to complete voiceprint registration. For a specific procedure, refer to the descriptions in the implementation in FIG. 2A-1 and FIG. 2A-2 or FIG. 2B-1 to FIG. B-3. Details are not described herein again.

It may be understood that FIG. 2C-1 to FIG. 2C-5 to FIG. 2F-1 to FIG. 2F-3 merely show examples of user interfaces on the electronic device 100, and should not constitute a limitation on the implementations of this application.

FIG. 2G-1 to FIG. 2G-3 are an example of yet another voice interaction diagram and yet another user interface diagram of voiceprint registration on the electronic device 100. In the implementations, a user may trigger a voiceprint registration procedure on a terminal device 200, to further complete voiceprint registration on the electronic device 100. The terminal device 200 may include but is not limited to a smartphone, a personal digital assistant, or the like. In the implementations, the electronic device 100 and the terminal device 200 may be connected by using a short-distance connection, for example, Bluetooth, or may be connected by using a wired connection, for example, a universal serial bus (Universal Serial Bus, USB). The Bluetooth connection is used as an example in FIG. 2G-1 to FIG. 2G-3.

As shown in FIG. 2G-1 to FIG. 2G-3, a user interface 43 may be a user interface triggered when a user performs an operation on an icon of an application corresponding to the electronic device 100.

When the user needs to perform voiceprint registration on the electronic device 100, the user may perform an operation on a control of "Settings" on the user interface 43 on the terminal device 200. The terminal device 200 displays a user interface 45 in response to the operation. The user may perform an operation on a control of "Voiceprint registration" on the user interface 45, to trigger a voiceprint registration procedure on the electronic device 100. In response to the operation performed by the user, on the control of "Voiceprint registration", the terminal device may first perform identity authentication on the user, for example, fingerprint match, prompt the user in plaintext with voiceprint registration precautions and risks, and further prompt the user whether voiceprint registration on the electronic device 100 needs to be triggered. When the user determines that voiceprint registration on the electronic device 100 needs to be triggered, the terminal device 200 sends a voiceprint registration request to the electronic device 100 by using the Bluetooth connection. The electronic device 100 receives the voiceprint registration request from the terminal device 200, and in response to the voiceprint registration request, outputs an utterance 1 "Please input your registered user ID". A user 1 may output an utterance 2 "The registered user ID is 13691831678". The electronic device displays a user interface 47 in response to the utterance 2. The user may read a text statement on the user interface 47 to complete voiceprint registration. For a specific voiceprint registration procedure, refer to the descriptions in the foregoing implementations. Details are not described herein again. Alternatively, the user may input a registered user ID on the terminal device 200. The voiceprint registration request may include the registered user ID input by the user. The electronic device may directly display a user interface 47, and the user may read a text statement on the user interface 47 to complete voiceprint registration.

To facilitate binding between the terminal device 200 and the registered user ID 13691831678, device information exchange may be further performed between the electronic device 100 and the terminal device 200. The terminal device 200 sends a device code of the terminal device 200 to the electronic device 100. The electronic device 100 stores the device code of the terminal device 200 in an information structure in which the registered user ID is 13691831678. In this way, after the terminal device 200 establishes a next connection to the electronic device 100, the electronic device 100 can find the registered user ID bound to the device code of the terminal device 200.

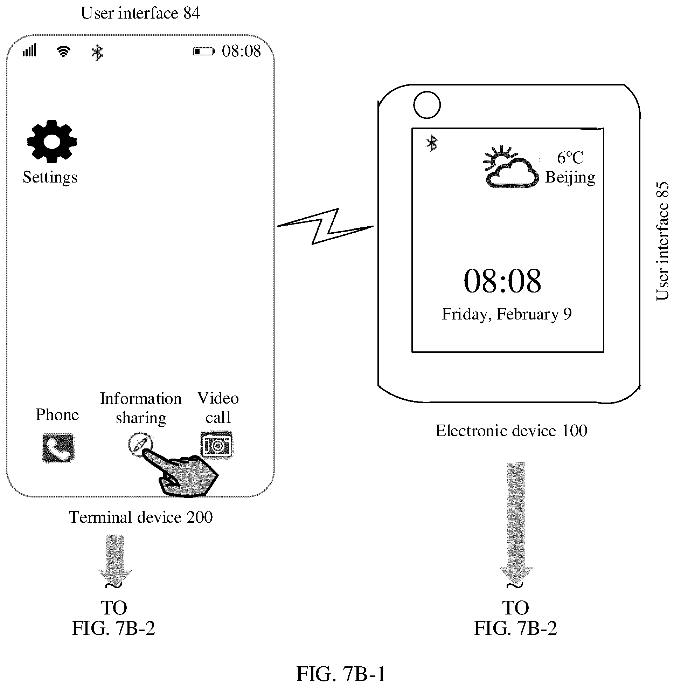

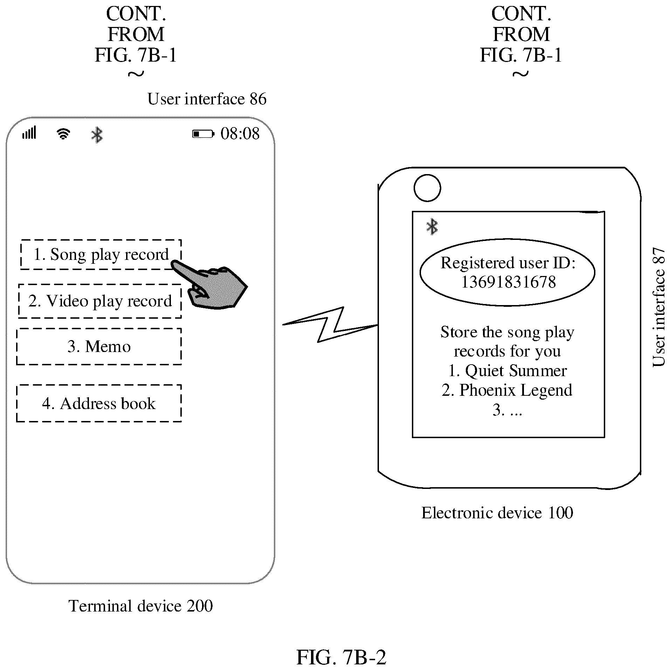

For example, to establish a secure connection between the terminal device 200 and the electronic device 100 and improve information exchange security, a key may be further exchanged between the terminal device 200 and the electronic device 100. One terminal device 200 corresponds to one key, that is, one device corresponds to one key. The electronic device 100 and the terminal device 200 jointly store one key. When a next connection is established between the electronic device 100 and the terminal device 200, the electronic device 100 and the terminal device 200 automatically exchange stored keys with each other. If the stored keys are the same, information sharing may be performed when the user is informed (for example, in a manner of outputting a pop-up box). For specific descriptions of the next connection between the electronic device 100 and the terminal device 200, refer to descriptions in FIG. 7B-1 and FIG. 7B-2. Details are not described herein.

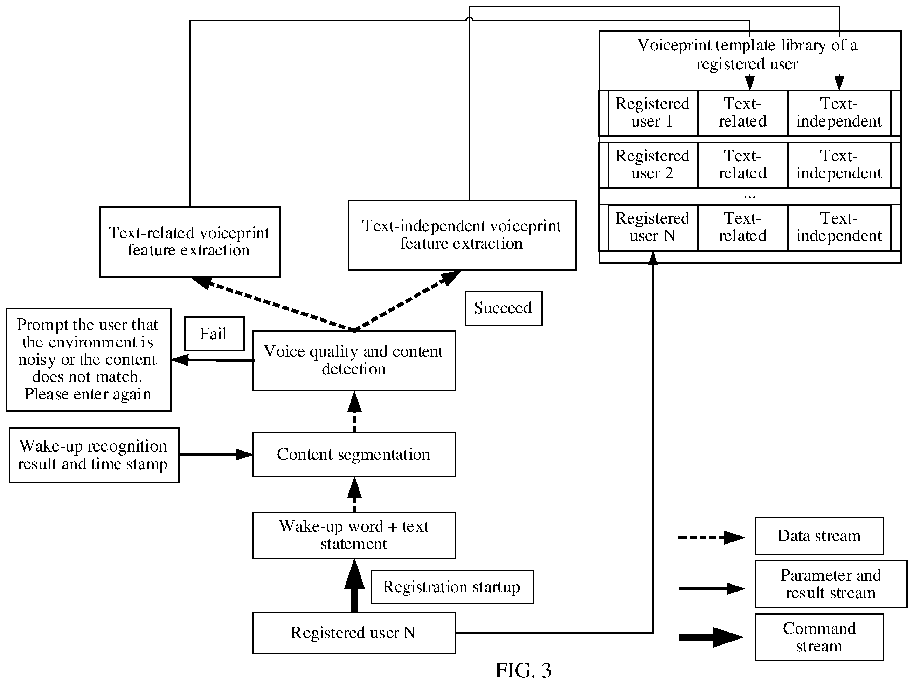

FIG. 3 is a schematic flowchart of a method for extracting a fingerprint feature of a registered voice signal of a registered user by an electronic device according to an implementation of this application.

The registered user may start voiceprint registration in the manner shown in FIG. 2A-1 and FIG. 2A-2, FIG. 2B-1 to FIG. 2B-3, FIG. 2C-1 to FIG. 2C-5 to FIG. 2F-1 to FIG. 2F-3, or FIG. 2G-1 to FIG. 2G-3, and the electronic device obtains the registered voice signal. The registered voice signal includes a wake-up word and a command statement. In this implementation of this application, a voice signal that includes a wake-up word in the registered voice signal is referred to as a text-related voice signal, and a voice signal that includes a command statement but does not include a wake-up word in the registered voice signal is referred to as a text-independent voice signal.

In this implementation of this application, the electronic device performs content segmentation on the registered voice signal. Content segmentation may be performed by using a wake-up recognition result. For example, the wake-up recognition result includes an end time stamp of the text-related voice signal, and then the text-related voice signal and the text-independent voice signal are obtained through segmentation by using the end time stamp as a segmentation point in the registered voice signal. Alternatively, in this implementation of this application, segmentation may be performed by using a content identification module. To be specific, the content identification module identifies the wake-up word and the command statement in the registered voice signal, uses the voice signal that includes the wake-up word as the text-related voice signal, and uses the voice signal that includes the command statement as the text-independent voice signal.

After completing content segmentation, the electronic device performs signal-to-noise ratio-based voice quality detection and content match detection on the registered voice signal, to ensure that the registered voice signal meets dual requirements of voice quality and content match. If the voice quality detection fails, the user is prompted with "The environment is noisy. Please enter again". If the content match detection fails, the user is prompted with "The content does not match. Please enter again".

After the voice quality detection and the content match detection on the registered voice signal succeed, voiceprint feature extraction may be performed. Voiceprint feature extraction is performed on the text-related voice signal based on a text-related voiceprint model, to obtain a text-related voiceprint feature. Voiceprint feature extraction is performed on the text-independent voice signal based on a text-independent voiceprint model, to obtain a text-independent voiceprint feature. Each registered user ID and a corresponding text-related voiceprint feature as well as a corresponding text-independent voiceprint feature are stored. As shown in FIG. 3, the registered user ID, the text-related voiceprint feature, and the text-independent voiceprint feature are stored in a registered user voiceprint template library.

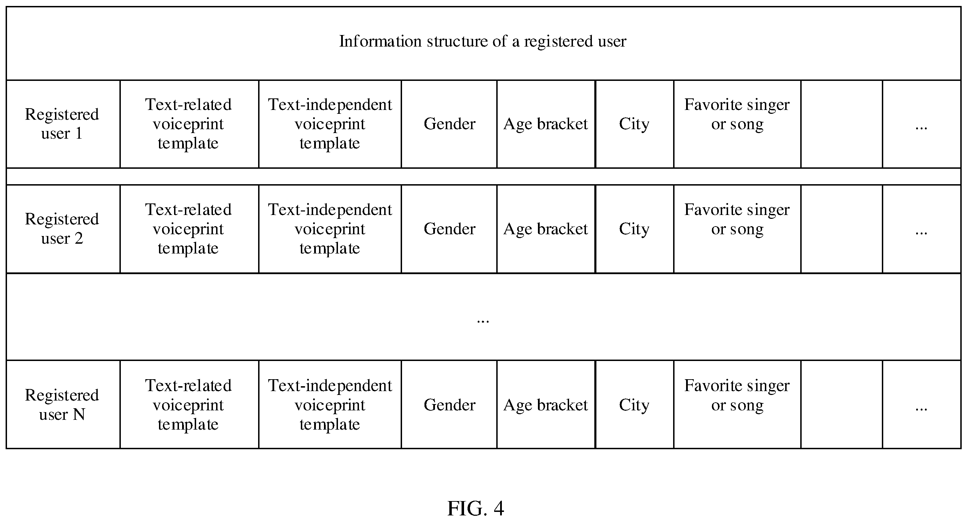

Optionally, for each registered user, a registered user ID and a text-related voiceprint feature as well as a text-independent voiceprint feature may be stored in the electronic device by using an information structure. Each time a new registered user, ID needs to be stored, a group of information about a registered user, is created in the electronic device to form an information structure corresponding to the registered user. FIG. 4 is a schematic diagram of an information structure according to an implementation of this application. As shown in the figure, one registered user corresponds to one information structure. Information that may be stored in the information structure includes but is not limited to: a registered user ID, a text-related voiceprint feature, a text-independent voiceprint feature, a gender, an age bracket, a city, a favorite singer or song, and the like. Information such as a gender, an age bracket, a city, a language, health information, and a favorite singer, song, or video program in the information structure may be input by the registered user through voice interaction during registration, or may be information about the registered user that is learned by the electronic device in a use process after the registered user registers. For details, refer to descriptions in subsequent implementations. Details are not described herein.

It should be noted that the information structure corresponding to the registered user may be stored in the electronic device. Further, information may be further stored in a system security zone of a system. The stored information is also encrypted in the system, so that a requirement of the user for information protection is met, and the user is allowed to delete the information. Optionally, with permission of the user, the information structure corresponding to the registered user may also be encrypted and stored in a server. When the user replaces an electronic device, the replaced electronic device can still conveniently obtain the information about the registered user.

With reference to several different application scenarios in which a user continuously accumulates personal information of a registered user in a process of using an electronic device, and when the electronic device identifies, through voiceprint recognition, that the user is a registered user, a personalized service is provided to the user based on personal information corresponding to a registered user ID, the following describes some implementations of voice interaction between the electronic device 100 and the user, and some implementations of a graphical user interface implemented on the electronic device 100 and a graphical user interface implemented on the terminal device 200.

### (1) Application scenario 1: Language or dialect communication

FIG. 5A-1 to FIG. 5A-4 and FIG. 5B-1 to FIG. 5B-4 show an example of an implementation of voice interaction between a user and an electronic device and an example of an implementation of a user interface of an electronic device. The user is a user 1, and the user 1 may hold a voice dialog with the electronic device, to store a preferred language or dialect of the user 1 in an information structure corresponding to the user 1. Subsequently, when the user 1 performs voice interaction with the electronic device, the electronic device performs interaction in the preferred language or dialect that has been set by the user 1. The language in the implementations of this application may include but is not limited to Chinese, English, Korean, and the like.

FIG. 5A-1 to FIG. 5A-4 and FIG. 5B-1 to FIG. 5B-4 show an example of an implementation in which voice interaction is performed between the user 1 and the electronic device in a previously specified Chongqing dialect preferred by the user 1.

The user 1 may perform voiceprint registration in the manner shown in FIG. 2A-1 and FIG. 2A-2, FIG. 2B-1 to FIG. 2B-3, FIG. 2C-1 to FIG. 2C-5 to FIG. 2F-1 to FIG. 2F-3, or FIG. 2G-1 to FIG. 2G-3. This is not limited. In some implementations, the user 1 may perform voiceprint registration in another manner.

After the user 1 completes voiceprint registration on the electronic device 100, the electronic device 100 stores a registered user ID of the user 1, a voiceprint feature of the user 1, and personal information of the user 1. The registered user ID, the voiceprint feature, and the personal information of the user 1 may be stored by using an information structure. As shown in FIG. 3, the registered user ID, the voiceprint feature, and the personal information of the user 1 may be stored in a registered user voiceprint template library. The voiceprint feature of the user 1 includes a text-related voiceprint feature and a text-independent voiceprint feature. When the user 1 subsequently uses the electronic device 100, as shown in FIG. 5A-1 to FIG. 5A-4, the electronic device 100 is in a standby state, that is, a user interface 40 is displayed. The user 1 outputs an utterance 1 "Xiaoyi Xiaoyi, I want to add my favorite dialect". The electronic device 100 first performs wake-up recognition on a voice signal corresponding to the utterance 1. When it is identified that the voice signal corresponding to the utterance 1 includes a wake-up word, the electronic device 100 is woken up. A content form of the utterance 1 is not limited thereto, and may be another content form, for example, "Xiaoyi Xiaoyi, I want to set common dialects", or "Xiaoyi Xiaoyi, add dialects".

Further, the electronic device 100 performs content segmentation on the voice signal corresponding to the utterance 1, divides the voice signal into a text-related voice signal and a text-independent voice signal, performs voiceprint recognition on the text-related voice signal and the text-independent voice signal based on a content segmentation result, and determines the registered user ID of the user 1 from the registered user voiceprint template library in FIG. 3. For a specific voiceprint recognition procedure, refer to descriptions in subsequent implementations. Details are not described herein.

In addition, content recognition and natural language understanding are performed on the text-independent voice signal, and operations that need to be performed by the electronic device 100 are displaying common dialects for user selection, that is, displaying a user interface 41, and outputting an utterance 2 "Which dialect do you prefer for subsequent communication". A content form of the utterance 2 is not limited thereto, and may be another content form, for example, "Please set common dialects", or "Please speak your favorite dialect".

When the user 1 hears the utterance 2 output by the electronic device 100, the user 1 immediately responds with an utterance 3 "I hope you will communicate with me in the Chongqing dialect in the future". It may be understood that a content form of the utterance 3 is not limited thereto, and may be another content form, for example, "Chongqing dialect", "I like the Chongqing dialect", or "Communicate in the Chongqing dialect". This is not limited in the implementations of this application.

The electronic device 100 obtains a voice signal corresponding to the utterance 3, performs content recognition and natural language understanding, and determines that an operation that needs to be performed by the electronic device 100 is storing the Chongqing dialect in the information structure corresponding to the user 1. The electronic device 100 displays a user interface 42, and outputs an utterance 4 "The Chongqing dialect has been stored as your preferred dialect".

This is not limited to a form of storing a language and/or a dialect for a registered user in FIG. 5A-1 to FIG. 5A-4. In the implementations of this application, a language and/or a dialect may be further stored for the registered user during registration. As shown in the user interface 13 in FIG. 2A-1 and FIG. 2A-2, the user interface 24 in FIG. 2B-1 to FIG. 2B-3, and the user interface 36 in FIG. 2E, the user may output an utterance "I want to further improve the personal information". In this case, the electronic device 100 may display categories of personal information that can be improved by the user, including but not limited to a gender, an age, an occupation, a taste, a language and/or a dialect, and the like. The registered user may selectively improve the foregoing personal information based on a requirement of the registered user. For example, the user may output an utterance "I like the Chongqing dialect", and the electronic device 100 stores the Chongqing dialect as a dialect preferred by the registered user. Alternatively, during registration, the user may perform voiceprint registration by reading a text statement displayed on a screen in a preferred dialect or language, for example, the text statement displayed on the user interface 12 in FIG. 2A-1 and FIG. 2A-2, the text statement displayed on the user interface 23 in FIG. 2B-1 to FIG. 2B-3, and the text statement displayed on the user interface 36 in FIG. 2E. The electronic device 100 performs recognition on a registered voice signal. The electronic device 100 not only performs text-related voiceprint feature extraction and text-independent voiceprint feature extraction on the registered voice signal, but also estimates, based on a dialect or language recognition model and parameter, a dialect or language used by the registered user. The dialect or language recognition model and parameter are obtained by collecting a large quantity of voice signals of different users offline, constructing a deep neural network model, and performing training by using a machine learning algorithm. A related result can be obtained by loading the related model and parameter.

As shown in FIG. 5B-1 to FIG. 5B-4, the electronic device 100 displays a user interface 50, that is, the electronic device 100 is in a standby state. The user 1 outputs an utterance 1 "Xiaoyi Xiaoyi, I'm free". The electronic device 100 obtains a voice signal corresponding to the utterance 1, performs wake-up recognition on the voice signal corresponding to the utterance 1, and determines whether the voice signal corresponding to the utterance 1 includes a wake-up word. If it is determined that the voice signal corresponding to the utterance 1 includes the wake-up word, the wake-up recognition succeeds, and the electronic device 100 is woken up.

Further, the electronic device 100 performs content segmentation on the voice signal corresponding to the utterance 1, divides the voice signal into a text-related voice signal and a text-independent voice signal, performs voiceprint recognition on the text-related voice signal and the text-independent voice signal based on a content segmentation result, and determines the registered user ID corresponding to the user 1 from the registered user voiceprint template library in FIG. 3. For a specific voiceprint recognition procedure, refer to descriptions in subsequent implementations. Details are not described herein. The personal information of the user 1 is obtained from an information structure corresponding to the registered user 1. For example, it is learned that the dialect of the user 1 is set to the Chongqing dialect.

In addition, content recognition and natural language understanding are performed on the text-independent voice signal, and it is determined that an operation that needs to be performed by the electronic device 100 is displaying a user interface 51, that is, outputting the obtained preferred dialect that has been set by the user 1 as the Chongqing dialect. In addition, the electronic device 100 outputs an utterance 2 "Let's chat" in the Chongqing dialect.

The user 1 may continue to respond with an utterance 3 "What's delicious in Chongqing?" in the Chongqing dialect. The electronic device 100 obtains a voice signal corresponding to the utterance 3, performs content recognition and natural language understanding on the voice signal corresponding to the utterance 3, determines that an operation that needs to be performed by the electronic device 100 is responding with an utterance 4 "The hot pot in Chongqing tastes very good. Recommend a few hot pot restaurants for you", and displays a user interface 52. The user interface 52 displays a location of a specific hot pot restaurant.

Not limited to FIG. 5A-1 to FIG. 5A-4 to FIG. 5B-1 to FIG. B-4, a page layout of each user interface may be presented in another form, and content information of each utterance may be in another content form. This is not limited in the implementations of this application.

In the implementations shown in FIG. 5A-1 to FIG. 5A-4 and FIG. B-1 to FIG. 5B-4 of this application, a preferred communication language and/or dialect is preset for a registered user. When the registered user subsequently uses the electronic device 100, the electronic device 100 determines a registered user ID through voiceprint recognition, that is, the electronic device 100 communicates with the registered user in the preset preferred communication language or dialect, so that communication efficiency and user experience are improved.

### (2) Application scenario 2: Health information-based personalized recommendation

FIG. 6A-1 and FIG. 6A-2 and FIG. 6B-1 to FIG. B-3 show an example of an implementation of voice interaction between a user, and the electronic device 100 and an example of an implementation of a user, interface of the electronic device 100. A user is a user 2, and the electronic device 100 may obtain health information of the user 2 through photographing, and store the health information of the user 2 in an information structure corresponding to the user 2. Subsequently, when the user 2 performs voice interaction with the electronic device 100, the electronic device 100 specifically provides a recommendation service for the user 2 based on the health information of the user 2.

FIG. 6A-1 and FIG. 6A-2 and FIG. 6B-1 to FIG. 6B-3 show an example of an implementation in which the electronic device 100 stores the health information of the user 2 in the electronic device 100 through photographing, and makes a specific recommendation for the user 2 by using the health information stored in the electronic device 100.

The user 2 may perform voiceprint registration in the manner shown in FIG. 2A-1 and FIG. 2A-2, FIG. 2B-1 to FIG. 2B-3, FIG. 2C-1 to FIG. 2C-5 to FIG. 2F-1 to FIG. 2F-3, or FIG. 2G-1 to FIG. 2G-3. This is not limited. In some implementations, the user 2 may perform voiceprint registration in another manner.

After the user 2 completes voiceprint registration on the electronic device 100, the electronic device 100 stores a registered user ID, a voiceprint feature, and personal information of the user 2. The registered user ID, the voiceprint feature, and the personal information of the user 2 may be stored by using an information structure. The voiceprint feature includes a text-related voiceprint feature and a text-independent voiceprint feature of the user 2. When the user 2 subsequently uses the electronic device 100, as shown in FIG. 6A-1 and FIG. 6A-2, the electronic device 100 is in a standby state, that is, a user interface 60 is displayed. The user 1 outputs an utterance 1 "Xiaoyi Xiaoyi, store the health information for me". The electronic device 100 first performs wake-up recognition on a voice signal corresponding to the utterance 1. When it is identified that the voice signal corresponding to the utterance 1 includes a wake-up word, the electronic device 100 is woken up.

Further, the electronic device 100 performs content segmentation on the voice signal corresponding to the utterance 1, divides the voice signal into a text-related voice signal and a text-independent voice signal, performs voiceprint recognition on the text-related voice signal and the text-independent voice signal based on a content segmentation result, and determines the registered user ID of the user 2 from the registered user voiceprint template library in FIG. 3. For a specific voiceprint recognition procedure, refer to descriptions in subsequent implementations. Details are not described herein.

In addition, the electronic device 100 further performs content recognition and natural language understanding on the text-independent voice signal in the voice signal corresponding to the utterance 1, determines that an operation that needs to be performed by the electronic device 100 is displaying storage manners that can be selected, that is, displaying a user interface 61, performs storage through photographing or a voice dialog, and outputs an utterance 2 "Which input mode do you select" is output. The utterance 2 may further include two manners that can be selected by the user.

When the user 2 hears the utterance 2 output by the electronic device 100, the user 2 immediately responds with an utterance 3 "The first one". It may be understood that a content form of the utterance 3 is not limited thereto, and may be another content form. This is not limited in the implementations of this application.

The electronic device 100 obtains a voice signal corresponding to the utterance 3, performs content recognition and natural language understanding, determines that an operation that needs to be performed by the electronic device 100 is turning on a camera of the electronic device 100, and outputs an utterance 4 "Please place your checklist above the screen for photographing". Optionally, during photographing, the electronic device 100 may further provide guidance for user's photographing problem, for example, prompting that the environment is too dark, or the distance is too close.

Optionally, if the electronic device 100 detects that content of the checklist can be identified, the electronic device 100 automatically performs photographing. Alternatively, the user may control, by using a voice "photographing" instruction, the electronic device 100 to perform photographing. After capturing a picture of the checklist, the electronic device 100 performs image recognition and displays a user interface 62. After completing the recognition on the picture, the electronic device 100 may output an utterance 5 "Identify high blood pressure and store your health information".

The health information is stored by photographing the checklist, so that the health information can be stored conveniently and quickly without requiring the user to read the checklist and then perform storage through complex voice interaction.

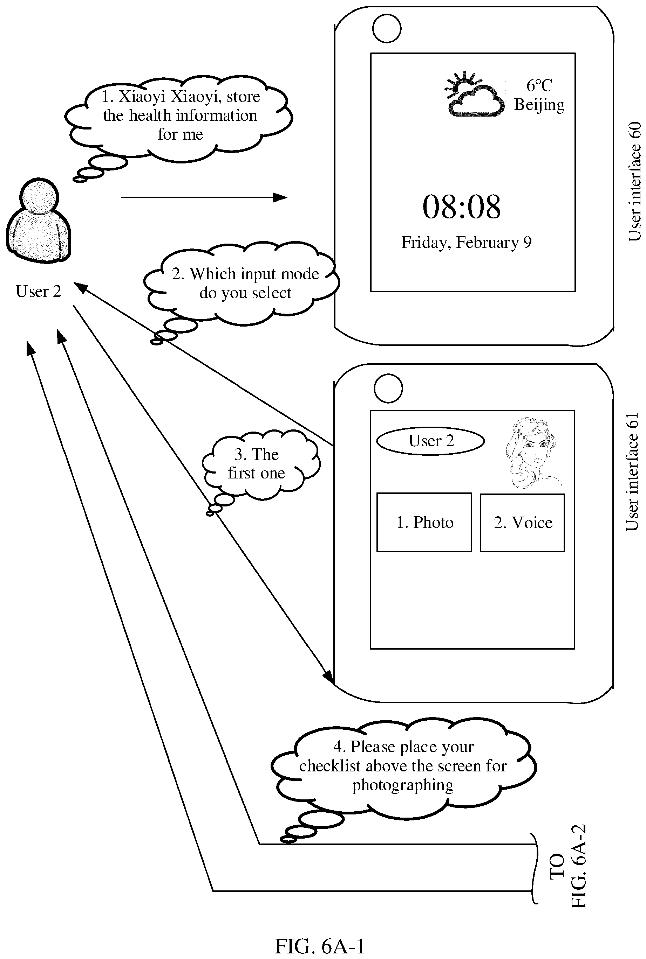

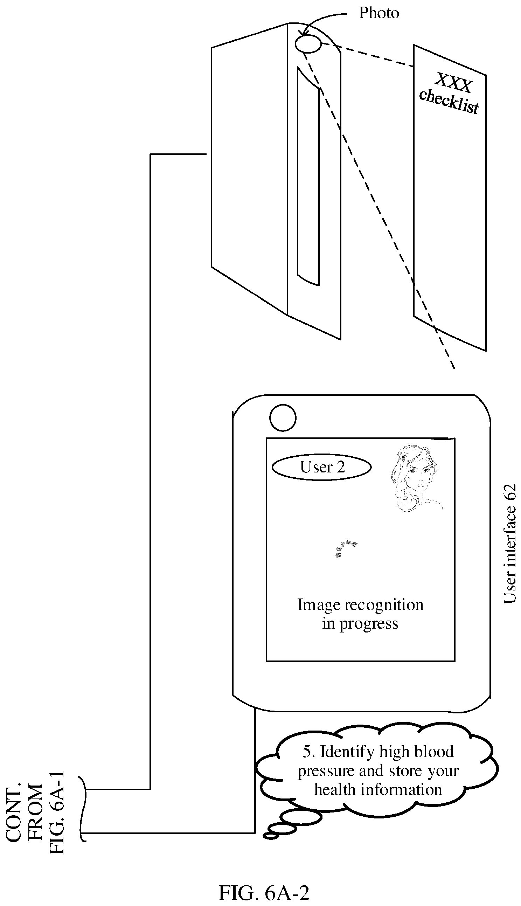

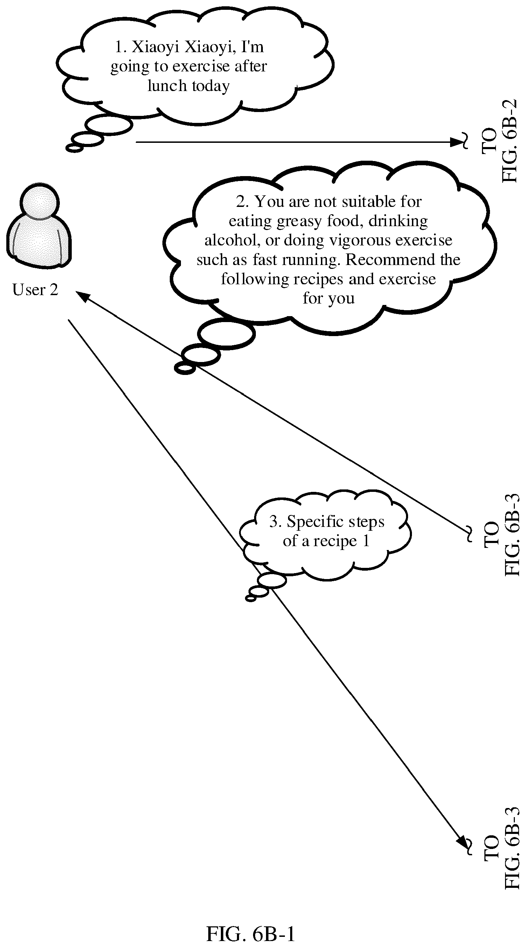

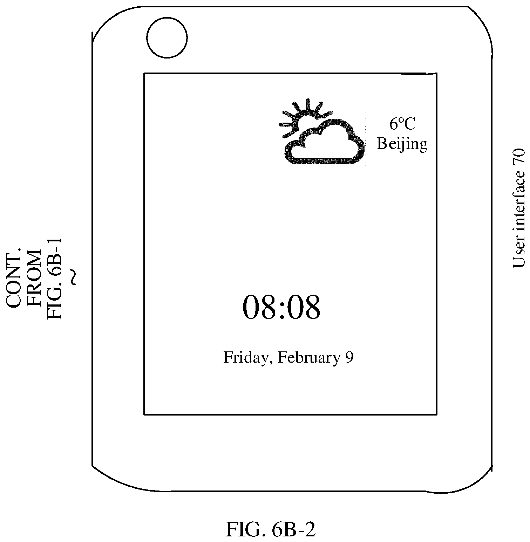

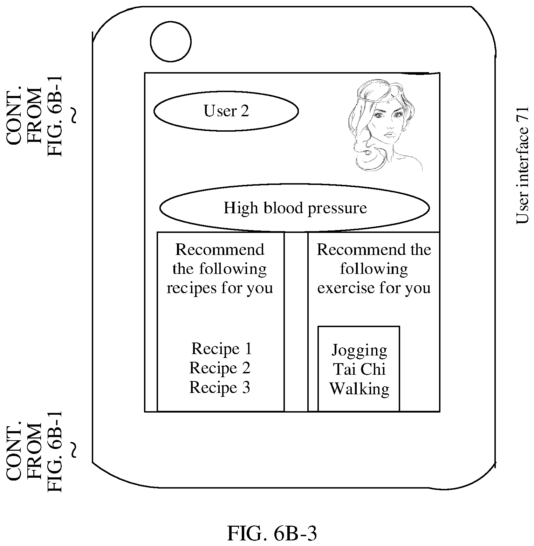

This is not limited to a form of storing health information for a registered user in FIG. A-1 and FIG. 6A-2. In the implementations of this application, health information may be further stored for the registered user during registration. As shown in the user interface 13 in FIG. 2A-1 and FIG. 2A-2, the user interface 24 in FIG. 2B-1 to FIG. 2B-3, and the user interface 36 in FIG. 2E, the user may output an utterance "I want to further improve the personal information". In this case, the electronic device 100 may display categories of personal information that can be improved by the user, including but not limited to a gender, an age, an occupation, a taste, health information, and the like. The registered user may selectively improve the foregoing personal information based on a requirement of the registered user. For example, the user may notify the electronic device 100 of the health information of the registered user in a voice manner.

As shown in the user interface 61 in FIG. 6A-1 and FIG. 6A-2, if the user outputs an utterance "The second one", the electronic device 100 responds with "What's the health information you need to store", and the user 2 may store the health information of the user 2 in the electronic device 100 in a voice response manner.

As shown in FIG. 6B-1 to FIG. 6B-3, the electronic device 100 displays a user interface 70, that is, the electronic device 100 is in a standby state. The user 2 outputs an utterance 1 "Xiaoyi Xiaoyi, I'm going to exercise after lunch today". The electronic device 100 obtains a voice signal corresponding to the utterance 1, performs wake-up recognition on the voice signal corresponding to the utterance 1, and determines whether the voice signal corresponding to the utterance 1 includes a wake-up word. If it is determined that the voice signal corresponding to the utterance 1 includes the wake-up word, the wake-up recognition succeeds, and the electronic device 100 is woken up.

Further, the electronic device 100 performs content segmentation on the voice signal corresponding to the utterance 1, divides the voice signal into a text-related voice signal and a text-independent voice signal, performs voiceprint recognition on the text-related voice signal and the text-independent voice signal based on a content segmentation result, and determines the registered user ID of the user 2 from the registered user voiceprint template library in FIG. 3. For a specific voiceprint recognition procedure, refer to descriptions in subsequent implementations. Details are not described herein. The personal information of the user 2 is obtained from an information structure corresponding to the registered user ID of the user 2. For example, it is learned that the health information of the user 2 is high blood pressure.

In addition, content recognition and natural language understanding are performed on the text-independent voice signal, a lunch recipe and an afternoon exercise type that need to be recommended to the user 2 are determined, and a recipe and an exercise type that are suitable for the user 2 are specifically recommended to the user with reference to the health information of the user 2. As shown in FIG. 6B-1 to FIG. 6B-3, the electronic device 100 displays a user interface 71, that is, displays health information that has been stored by the user 2, and a recipe and an exercise type that are specifically recommended for the user 2 based on the health information. In addition, the electronic device 100 outputs an utterance 2 "You are not suitable for eating greasy food or doing vigorous exercise. Recommend the following recipes and exercise for you". Optionally, the user 2 may select a specific step of a recipe in a voice manner, for example, a recipe 1.

Not limited to FIG. 6A-1 and FIG. 6A-2 to FIG. 6B-1 to FIG. 6B-3, a page layout of each user interface may be presented in another form, and content information of each utterance may be in another content form. This is not limited in the implementations of this application.

In the implementations shown in FIG. 6A-1 and FIG. 6A-2 and FIG. 6B-1 to FIG. 6B-3 of this application, a registered user may store health information of the registered user in a plurality of manners. When the registered user, subsequently uses the electronic device 100, the electronic device 100 determines a registered user, through voiceprint identification, and makes a specific recommendation for the registered user based on health information corresponding to a registered user ID, including but not limited to a recipe and exercise. This improves a personalized service that better matches a user requirement.

### (3) Application scenario 3: Gender and/or age-based personalized service

A user 3 may perform voiceprint registration in the manner shown in FIG. 2A-1 and FIG. 2A-2, FIG. 2B-1 to FIG. 2B-3, FIG. 2C-1 to FIG. 2C-5 to FIG. 2F-1 to FIG. 2F-3, or FIG. 2G-1 to FIG. 2G-3. This is not limited. In some implementations, the user 3 may perform voiceprint registration in another manner.

In the implementations of this application, a user is the user 3. When performing voiceprint registration, the user 3 reads a text statement displayed on a screen. As shown in the user interface 12 in FIG. 2A-1 and FIG. 2A-2, the user interface 23 in FIG. 2B-1 to FIG. 2B-3, and the user interface 35 in FIG. 2E, the electronic device 100 obtains a registration voice signal. The electronic device 100 not only performs text-related voiceprint feature extraction and text-independent voiceprint feature extraction on the registered voice signal, but also estimates a gender of the registered user based on a gender recognition model and parameter, and/or estimates an age bracket of the registered user based on an age bracket recognition model and parameter. Therefore, an information structure of the registered user is enriched.

The gender recognition model and parameter and the age bracket recognition model and parameter are obtained by collecting a large quantity of voice signals of different users offline, constructing a deep neural network model, and performing training by using a machine learning algorithm. A related result can be obtained by loading the related model and parameter.

It should be noted that, if the electronic device 100 cannot accurately obtain the gender and the age bracket of the user by using the registered voice signal of the user 3 during registration, after the registration is completed, the electronic device 100 may collect another voice signal of the registered user in a subsequent use process to complete recognition of the gender and the age bracket.

Alternatively, when the user 3 performs voiceprint registration, as shown in the user interface 13 in FIG. 2A-1 and FIG. 2A-2, the user interface 24 in FIG. 2B-1 to FIG. 2B-3, and the user interface 36 in FIG. 2E, the user may output an utterance "I want to further improve the personal information", to improve the personal gender and/or age information. Alternatively, after performing voiceprint registration, the user 3 may further improve the personal gender and/or age information in a voice interaction manner. In this case, the electronic device 100 needs to first perform voiceprint recognition on the user 3 to determine a corresponding registered user ID, to store the gender and/or age information in an information structure corresponding to the registered user ID.

After the user 3 completes the voiceprint registration on the electronic device 100, the electronic device 100 stores a registered user ID of the user 3, a voiceprint feature of the user 3, and personal information of the user 3. The registered user ID, the voiceprint feature, and the personal information of the user 3 may be stored by using an information structure. The voiceprint feature includes a text-related voiceprint feature and a text-independent voiceprint feature of the user 3. Further, if the electronic device 100 completes the recognition on the gender and/or the age bracket of the user 3, the information structure further stores the gender and/or the age bracket of the user 3, so that the electronic device 100 subsequently provides a personalized service for the user 3. The electronic device may provide a personalized service for the user 3 based on the gender or the age, or may provide a personalized service for the user 3 based on both the gender and the age.

If the age bracket of the user 3 indicates children, when the user 3 subsequently uses the electronic device 100, the electronic device 100 determines, through voiceprint recognition, the registered user ID corresponding to the user 3, and learns, from the information structure corresponding to the registered user ID, that the age bracket of the user 3 indicates children. In this case, the electronic device 100 uses a more childish and cartoon answer style, and uses a corresponding tone to perform voice synthesis, so as to satisfy children's dialog habits and fun. For example, the user 3 outputs an utterance "Xiaoyi Xiaoyi, I want to watch TV". The electronic device 100 first performs wake-up recognition on a voice signal corresponding to the utterance. When it is identified that the voice signal corresponding to the utterance includes a wake-up word, the electronic device 100 is woken up. Then, content recognition is performed on a text-independent voice signal in the utterance, and it is determined that a television program needs to be recommended to the user 3. With reference to the age bracket of the user 3 of children, the electronic device 100 may respond with an utterance "Kid, did you finish your homework today? You can watch TV only after you finish it" in a tone of Money King.

If the age bracket of the user 3 indicates the aged, when the user 3 subsequently uses the electronic device 100, the electronic device 100 determines, through voiceprint recognition, the registered user ID corresponding to the user 3, and learns, from the information structure corresponding to the registered user ID, that the age bracket of the user 3 indicates the aged. In this case, the electronic device 100 uses more mature and concise dialog content, and properly turns play volume up to ensure a smooth dialog. For example, the user 3 outputs an utterance "Xiaoyi Xiaoyi, I want to watch TV series". The electronic device 100 first performs wake-up recognition on a voice signal corresponding to the utterance. When it is identified that the voice signal corresponding to the utterance includes a wake-up word, the electronic device 100 is woken up. Then, content recognition is performed on a text-independent voice signal in the utterance, and it is determined that a television program needs to be recommended to the user 3. With reference to the age bracket of the user 3 of the aged, the electronic device 100 recommends, to the user 3, TV series describing life in the 1950s and 1960s, and turns play volume up.

If the gender of the user 3 indicates females, when the user 3 subsequently uses the electronic device 100, the electronic device 100 determines, through voiceprint recognition, the registered user ID corresponding to the user 3, and learns, from the information structure corresponding to the registered user ID, that the gender of the user 3 indicates females. In this case, the electronic device recommends content favored by the females to the user 3. For example, if the user 3 outputs an utterance "I want to buy sandals", the electronic device 100 preferentially recommends female sandals to the user 3.

For example, in the implementations of this application, a specific recommendation may be further made with reference to the gender and the age bracket of the user 3. For example, if the user 3 is a middle-aged male, the electronic device 100 may respond to an utterance of the user 3 in a middle-aged male voice. If the user 3 needs to watch news, international current news may be recommended to the user. This is not limited in the implementations of this application. Based on an age and/or a gender of a registered user, the electronic device 100 not only can synthesize an utterance having a corresponding tone, but also can recommend recommended content that meets the age and/or the gender of the registered user.

Content information of each utterance may be in another content form. This is not limited in the implementations of this application.

### (4) Application scenario 4: Implement a personalized service based on information sharing between the electronic device and the terminal device

FIG. 7A-1 to FIG. 7A-4 are an example of an implementation of a UI for starting information sharing on the terminal device 200 shown in the implementations of this application. A user may input a user interface 80 in FIG. 7A-1 to FIG. 7A-4 by performing an operation on the icon of the XXX application on the user interface 30 in FIG. 2C-1 to FIG. 2C-5. The user interface 80 displays a user login interface, and the login interface displays text input boxes of "Account" and "Password", and a control of "Log in" and a control of "Register".

The user is a user 1. After inputting an account and a password, the user 1 performs an operation on the control of "Log in". The terminal device 200 displays a user interface 81 in response to the operation on the control of "Log in". Because the account has been bound to the electronic device 100, the user interface 81 displays a control of "Device 00X10". If the user 1 performs an operation on a control of "Settings", the electronic device 100 displays an application setting interface in response to the operation. The user 1 may perform account logout, password modification, avatar replacement, and the like on the application setting interface.

If the user 1 performs an operation on the control of "Device 00X10" on the user interface 81, the terminal device 200 sends a network connection request to a server in response to the operation on the control of "Device 00X10". The network connection request includes a login account of the terminal device 200 and a device code of the electronic device 100. The server receives the network connection request, and sends network connection information to the electronic device 100 identified by the device code. The network connection information includes the login account, to establish a network connection between the terminal device 200 and the electronic device 100. The terminal device 200 displays a user interface 82. Prompt information output on the user interface 82 is used to prompt the user whether to allow information sharing between the terminal device 200 and the electronic device 100. The user may select "Yes" or "No".

If the user selects "Yes", the terminal device displays a user interface 83. The user interface 83 displays a control of "Settings" and a shared information type that can be selected:
1. Song play record of the user on the terminal device 200: Optionally, a quantity of play times of playing each song by the user may be further displayed.
2. Video play record of the user on the terminal device 200
3. Memo and/or alarm clock that are/is set by the user on the terminal device 200
4. Address book that is set by the user on the terminal device 200: The address book includes a phone number of each contact.

It may be understood that the shared information types 1 to 4 are merely examples, and there may be another type. This is not limited in the implementations of this application. The user may select at least one of these types.

If the user selects the type 1, that is, the user may perform an operation on a control of "Song play record", the terminal device 200 sends, to the electronic device 100 in response to the operation, song information that is recently played by the user and that is buffered in the terminal device 200. The song information includes but is not limited to a song name, a quantity of play times, and the like.

If the user selects the type 2, that is, the user may perform an operation on a control of "Video play record", the terminal device 200 sends, to the electronic device 100 in response to the operation, video play information that is of a video recently played by the user and that is buffered in the terminal device 200. The video play information includes but is not limited to a video name, an end time point of last play, and the like.

If the user selects the type 3, that is, the user may perform an operation on a control of "Memo", the terminal device 200 sends, to the electronic device 100 in response to the operation, memo information that is set by the user on the terminal device 200.

If the user selects the type 4, that is, the user may perform an operation on a control of "Address book", the terminal device 200 sends an address book stored in the terminal device to the electronic device 100 in response to the operation. Optionally, a recent call record of the user may be sent to the electronic device 100.

FIG. 7B-1 and FIG. 7B-2 are an example of an implementation of a UI for starting information sharing on the terminal device 200 shown in the implementations of this application. Before information sharing is performed, a user may complete voiceprint registration on the electronic device 100 by using the terminal device 200 in the voiceprint registration manner shown in FIG. 2G-1 to FIG. 2G-3. In addition, the electronic device 100 stores a correspondence between a device code of the terminal device 200 and a registered user ID. In other words, an information structure in which the registered user ID of the electronic device is 13691831678 stores the device code of the terminal device 200. In addition, the terminal device 200 and the electronic device 100 jointly store one key, and the key uniquely corresponds to one terminal device 200. As shown in FIG. 7B-1 and FIG. 7B-2, a connection is established between the electronic device 100 and the terminal device 200 in a proximity connection manner such as Bluetooth or USB.

The user may input a user interface 84 in FIG. 7B-1 and FIG. 7B-2 by performing an operation on the icon of the XXX application on the user interface 30 in FIG. 2C-1 to FIG. 2C-5. The user may perform an operation on a control of "Information sharing" on the user interface 84. The terminal device 200 displays a user interface 86 in response to the operation, and sends an information sharing request to the electronic device 100. The information sharing request includes a device code of the terminal device, and the electronic device 100 may find, by using the device code in the information sharing request, that a corresponding registered user ID is 13691831678. Optionally, the electronic device 100 and the terminal device 200 may exchange a key with each other, to ensure information sharing security. In a condition of ensuring information sharing security, information sharing may be performed between the terminal device 200 and the electronic device 100.

The user may perform a selection operation on at least one piece of information that needs to be shared and that is displayed on the user interface 86. The terminal device 200 sends, to the electronic device 100 in response to the selection operation, the information that needs to be shared and that is selected by the user. The electronic device receives the information that needs to be shared, and displays a user interface 87.

FIG. 7C-1 to FIG. 7C-4 are an example of an implementation of a UI for starting information sharing on the terminal device 200 shown in the implementations of this application. In the implementations, a user may perform voiceprint registration on the electronic device 100 in a manner including but not limited to the manner in FIG. 2A-1 and FIG. 2A-2 or FIG. 2B-1 to FIG. 2B-3. Alternatively, the user has not performed voiceprint registration. The user may connect the electronic device 100 to the terminal device 200 for the first time.

The user may input a user interface 88 in FIG. 7C-1 to FIG. 7C-4 by performing an operation on the icon of the XXX application on the user interface 30 in FIG. 2C-1 to FIG. 2C-5, or the user may perform an operation on the control of "Information sharing" on the user interface 84. The terminal device 200 displays the user interface 88 in response to the operation, and prompts the user that the terminal device 200 has established a connection to the electronic device 100. The user determines whether voiceprint registration has been performed on the electronic device 100. A registration manner may be the voiceprint registration manner in FIG. 2A-1 and FIG. 2A-2 or FIG. 2B-1 to FIG. 2B-3.

If the user selects "Yes", the terminal device 200 displays a user interface 89, to further prompt the user whether to perform information sharing with the electronic device 100. If the user selects "Yes", the terminal device 200 sends an information sharing request to the electronic device 100. The electronic device 100 may return, to the terminal device 200, a registered user ID through which voiceprint registration has been performed on the electronic device 100. The terminal device 200 receives the registered user ID returned by the electronic device 100, and displays a user interface 90, so that the user further selects a registered user ID with which the user registers. The terminal device 200 displays a user interface 91 in response to a selection operation performed by the user on the registered user ID. The user may further select, from the user interface 91, information type that needs to be shared. The terminal device sends, to the electronic device 100, the registered user ID selected by the user and the shared information selected by the user. The electronic device 100 receives the registered user ID and the selected shared information, and displays a user interface 92. For a specific response manner of the electronic device 100, refer to an implementation in FIG. 8A. Details are not described herein.

Optionally, after the user performs a selection operation on a control "Yes" on a user interface 89, the terminal device 200 sends an information sharing request to the electronic device 100, and the terminal device 200 displays a user interface 91. After receiving the information sharing request, the electronic device 100 may display a registered user ID stored in the electronic device 100 for user selection. That is, the user may select a registered user ID on the terminal device 200 or the electronic device 100.

To establish a correspondence between the terminal device 200 and a registered user ID (to help the electronic device 100 directly obtain the registered user ID corresponding to the terminal device 200 when the terminal device 200 establishes a connection to the electronic device 100 again), the terminal device 200 may further send a device code of the terminal device 200 to the electronic device 100. The electronic device 100 stores the device code of the terminal device in an information structure corresponding to the registered user ID selected by the user, to establish the correspondence between the terminal device 200 and the registered user ID.

For example, to establish a secure connection between the terminal device 200 and the electronic device 100 and improve information exchange security, a key may be further exchanged between the terminal device 200 and the electronic device 100. One terminal device 200 corresponds to one key, that is, one device corresponds to one key. The electronic device 100 and the terminal device 200 jointly store one key. When a next connection is established between the electronic device 100 and the terminal device 200, the electronic device 100 and the terminal device 200 automatically exchange stored keys with each other. If the stored keys are the same, information sharing may be performed when the user is informed (for example, in a manner of outputting a pop-up box).

For example, if the user has not performed voiceprint registration on the electronic device 100, that is, on the user interface 88, the user selects "No". In this case, the terminal device 200 may output prompt information to guide the user to perform voiceprint registration. For example, voiceprint registration may be performed in the manner shown in FIG. 2G-1 to FIG. 2G-3.

FIG. 8A is an example of an implementation of a UI on the electronic device shown in the implementations of this application. When a user 1 performs an operation on the control "Device 00X10" on the user interface 81 in FIG. 7A-1 to FIG. 7A-4, the terminal device 200 sends a network connection request to a server in response to the operation. The network connection request includes a login account of the terminal device 200 and a device code of the electronic device 100. The server receives the network connection request, and sends network connection information to the electronic device 100 identified by the device code. The network connection information includes the login account. The electronic device 100 receives the network connection information, and the electronic device 100 establishes a network connection to the terminal device 200 in response to the network connection information. The electronic device further searches, based on the login account carried in the network connection information, stored registered user IDs for a registered user ID that matches the login account, and determines the matched registered user ID as a target registered user ID.

When the user performs an operation of selecting an information type on the user interface 83 in FIG. 7A-1 to FIG. 7A-4, the terminal device 200 sends, to the electronic device 100 in response to the operation, information that needs to be shared and that is selected by the user, including but not limited to the information of the type 1 to the type 4 described in the implementation of FIG. 7A-1 to FIG. 7A-4. The electronic device 100 stores, in an information structure corresponding to the target registered user ID, the information that needs to be shared and that is sent by the terminal device 200, to subsequently provide a personalized service for the user 1.

If the user selects the song play record on the user interface 83 in FIG. 7A-1 to FIG. 7A-4, the terminal device 200 sends the song play record information to the electronic device 100. As shown in FIG. 8A, the electronic device 100 receives the song play record information, and displays a user interface 93. Song play records displayed on the user interface 93 may be arranged and displayed based on a quantity of play times. The electronic device outputs an utterance 1 "Your song play record has been received and stored".

Optionally, the user may send the song play record of the terminal device 200 to the electronic device 100 in the manner shown in FIG. 7B-1 and FIG. 7B-2 or FIG. 7C-1 to FIG. 7C-4. If the user sends the song play record in the manner shown in FIG. 7B-1 and FIG. 7B-2, the terminal device 200 needs to send a device code of the terminal device 200 to the electronic device 100, so that the electronic device 100 finds a corresponding registered user ID based on the device code of the terminal device 200, and uses the ID as a corresponding registered user ID that needs to be stored in the song play record. If the user sends the song play record in the manner shown in FIG. 7C-1 to FIG. 7C-4, the electronic device 100 uses a registered user ID selected by the user (which may be selected on the terminal device 200 or the electronic device 100) as a corresponding registered user ID stored in the song play record. As shown in FIG. 8A, the electronic device 100 receives the song play record information, and displays a user interface 93. Song play records displayed on the user interface 84 may be arranged and displayed based on a quantity of play times. The electronic device 100 outputs an utterance 1 "Your song play record has been received and stored".

For example, to ensure information security between the electronic device 100 and the terminal device 200, before information transmission is performed, the electronic device 100 and the terminal device 200 may exchange a key with each other, to ensure information transmission security.

It may be understood that an example in which the user selects the "song play record" is used herein, and the user may alternatively select other information. For example, one piece of type information or a plurality of pieces of type information may be selected and stored in the electronic device 100. This constitutes no limitation on the implementations of this application.

After the electronic device 100 stores, in the manner shown in FIG. 8A, the information shared by the terminal device 200, when the user subsequently uses the electronic device 100 again, the electronic device 100 can provide a personalized service for the user based on the shared information stored in the electronic device 100. As shown in FIG. 8B, a user is a user 1, and the electronic device 100 is in a standby state. The electronic device displays a user interface 94, that is, the electronic device is in a standby state. The user 1 outputs an utterance 1 "Xiaoyi Xiaoyi, I want to listen to a song". The electronic device obtains a voice signal corresponding to the utterance 1, performs wake-up recognition on the voice signal corresponding to the utterance 1, and determines whether the voice signal corresponding to the utterance 1 includes a wake-up word. If it is determined that the voice signal corresponding to the utterance 1 includes the wake-up word, the wake-up recognition succeeds, and the electronic device is woken up.

Further, the electronic device performs content segmentation on the voice signal corresponding to the utterance 1, divides the voice signal into a text-related voice signal and a text-independent voice signal, performs voiceprint recognition on the text-related voice signal and the text-independent voice signal based on a content segmentation result, and determines the registered user ID of the user 1 from the registered user voiceprint template library in FIG. 3. For a specific voiceprint recognition procedure, refer to descriptions in subsequent implementations. Details are not described herein. The personal information of the user, 1 is obtained from an information structure corresponding to the registered user ID of the user 1. For example, the song play record of the user 1 on the terminal device 200 is obtained.

In addition, content recognition and natural language understanding are performed on the text-independent voice signal, it is determined that a song needs to be recommended to the user 1, and a song suitable for the user is specifically recommended to the user 1 with reference to the song play record of the user 1 on the terminal device 200. As shown in FIG. 8B, "Quiet Summer" in the song play record stored in the registered user ID is played most times. As shown in FIG. 8B, the electronic device displays a user interface 95, that is, displays the song that needs to be played: Quiet Summer, and the electronic device outputs an utterance 2 "OK, play Quiet Summer for you".

Optionally, if the user 1 outputs an utterance "I want to watch a video", the electronic device 100 obtains corresponding video play information based on the video play record received from the terminal device 200, and recommends a recently played video to the user 1. Optionally, video play information includes an end time point of last play of a recently played video, and the electronic device 100 continues to play the video from the end time point.

Optionally, if the user 1 outputs an utterance "Open my memo", the electronic device 100 displays a memo of the user to the user based on the memo information received from the terminal device 200.

Optionally, if the user 1 outputs an utterance "I want to make a call", the electronic device 100 obtains, based on the address book received from the terminal device 200, a phone number of a contact A that the user has recently made frequent calls, and responds with "Do you need to make a call to A?". If the user answers "Yes", the electronic device 100 may make an internet call to A.

It may be understood that, in addition to the foregoing case in which the terminal device 200 shares the information with the electronic device 100, the electronic device 100 may also share information with the terminal device. For example, the user 1 may output an utterance "I want to share information with the terminal device" to the electronic device 100. The electronic device 100 may output a shared information type that can be selected, including but not limited to a video play record, a song play record, and the like. If the user selects the video play record, the electronic device sends the video play record and the registered user ID of the user 1 to a server, and the server pushes the video play record to a login account that matches the registered user ID, to share the information about the electronic device 100 with the terminal device 200. The terminal device 200 is logged in to by using the account.

It may be understood that "information sharing" is merely a term used in the implementations, a meaning represented by the term has been recorded in the implementations, and a name of the term does not constitute any limitation on the implementations. In some other implementations of this application, "information sharing" may also be referred to as another term, such as "information communication and exchange", "information transmission", "sharing of information about a terminal device with an electronic device", or "sharing of information about an electronic device with a terminal device".

The implementations of this application may be further applied to other scenarios in addition to the foregoing application scenarios. For example, a registered user frequently asks about weather of a city. After performing analysis and comparison for a plurality of times, the electronic device stores information about the city in an information structure corresponding to a registered user ID. When the registered user subsequently asks about the weather again, but does not provide location information, the electronic device provides the weather of the city that is stored in the information structure corresponding to the registered user ID. This application scenario is particularly applicable to an electronic device on which a global positioning system (Global Positioning System, GPS) is not installed.

For another example, a registered user frequently requests the electronic device to play a song of a singer or a song. After performing analysis and comparison, the electronic device stores this part of preference information in an information structure corresponding to a registered user ID. When the registered user subsequently requests the electronic device to play a song, the electronic device recommends the preferred song stored in the information structure corresponding to the registered user ID to the user. This application scenario is particularly applicable to a case in which the electronic device needs to specifically recommend information suitable for a user when information provided by the user is relatively simple, for example, the user provides only "play a song".

It should be noted that the electronic device identifies the user to determine the registered user ID according to a voiceprint recognition procedure provided in subsequent implementations.

In the foregoing implementations, if the electronic device does not find the registered user from the registered user voiceprint template library through voiceprint recognition, the electronic device loads a common setting, and provides a common service.

It may be understood that the electronic device 100 in the foregoing implementations may include a screen, or may not include a screen. If the electronic device 100 includes a screen, display may be performed by using the user interface of the electronic device 100 in the foregoing implementation of the UI. Alternatively, if the electronic device 100 does not include a screen, the electronic device 100 may output, in a voice manner, content displayed on the user interface. For example, in the foregoing implementations, when the electronic device 100 displays a text statement, so that the user reads the text statement and performs voiceprint registration, the electronic device 100 may allow the user to read the text statement following the electronic device 100, that is, the electronic device 100 reads one statement, and the user follows the electronic device 100 to read the statement. The electronic device 100 collects a registered voice signal for reading the text statement by the user. For example, the electronic device may output an utterance: "Please follow me to read the following text statement".

Based on the foregoing implementation of voice interaction between the electronic device and the user and the foregoing implementation of the UI described in the foregoing content, the following implementations describe a system architecture for implementing the foregoing implementation of voice interaction and the foregoing implementation of the UI in this application. FIG. 9A-1 and FIG. 9A-2 are a diagram of a system architecture according to an implementation of this application. The system architecture includes procedures of wake-up recognition, voiceprint recognition, and content recognition.

In this implementation of this application, a wake-up recognition module and a voiceprint recognition module are decoupled. When a voice signal includes a wake-up word, wake-up of the electronic device is preferentially ensured to respond to a wake-up requirement of any user. When a voice signal includes a command statement, the electronic device fuses voiceprint recognition of a text-related voiceprint feature and that of a text-independent voiceprint feature, to ensure voiceprint recognition performance with higher accuracy.

As shown in FIG. 9A-1 and FIG. 9A-2, a microphone of the electronic device samples a voice signal, and then performs microphone activity detection (microphone activity detection, MAD) on the voice signal. Microphone activity detection is to implement energy detection on a voice signal collected by the microphone. When energy of the output voice signal exceeds a specific threshold, a next-level human voice detection module is started to perform human voice detection and determining. A microphone activity detection module configured to perform microphone activity detection may be hardened into a component chip, to better implement energy saving and running efficiency.

Human voice detection and determining are to detect whether an input voice signal meets basic features of a human voice, and perform wake-up recognition through a next-level wake-up recognition module only after it is ensured that the input voice signal is a human voice signal. The basic features of the human voice include fundamental frequency and harmonics, and a proportion of signal energy from 100 hz to 4000 hz.

The wake-up recognition module is provided with a wake-up word recognition model and parameter, and performs voice recognition on a voice signal, determines whether a specific wake-up word such as "Xiaoyi Xiaoyi" is included, and if it is determined that the wake-up word is included, wakes the electronic device to implement a subsequent function. In FIG. 5A-1 to FIG. 5A-4, FIG. 5B-1 to FIG. 5B-4, FIG. 6A-1 and FIG. 6A-2, and FIG. 6B-1 to FIG. 6B-3, wake-up recognition needs to be performed on the voice signal to determine whether the voice signal includes the wake-up word "Xiaoyi Xiaoyi", and when it is determined that the voice signal includes the wake-up word, the electronic device is woken up.

Wake-up recognition is generally performed by using a deep learning model and parameter, for example, a method for performing recognition based on an acoustic model of a deep neural network in combination with decoding, or a model and parameter for performing end-to-end keyword recognition by using a deep neural network model.

Optionally, if the electronic device is a powered device, the wake-up recognition module may be a level-1 wake-up recognition module. If the electronic device is a device for which power consumption needs to be considered, a level-2 wake-up mechanism may be considered. Level-1 wake-up recognition implements a small-scale wake-up recognition system, and when a voice signal that includes a wake-up word is guaranteed to succeed in the level-1 wake-up while saving computing resources, stops as many voice signals as possible that include voices, but do not include a wake-up word. Level-2 wake-up recognition implements more accurate wake-up word recognition by using a larger-scale wake-up recognition system, and excludes a voice signal that passes through level-1 wake-up but does not include a wake-up word.

The microphone activity detection module, the human voice detection module, and the wake-up recognition module require running times before a result of determining whether the voice signal passes through. Therefore, each module needs to be provided with a storage module, and then before a result of determining whether the voice signal passes through is obtained, a voice signal that has been processed and sent is temporarily buffered, to ensure integrity of data to be processed subsequently.

Optionally, environments in which the electronic device is located are not only diverse but also noisy in many cases. In the implementations of this application, to ensure accuracy of wake-up recognition, voiceprint recognition, and content recognition, a front-end enhancement module may be added before the wake-up recognition module. The front-end enhancement module is configured to: assist in voice wake-up recognition of a single-microphone voice signal or a multi-microphone voice signal, and reduce noise as much as possible while ensuring fidelity of the voice signal, to improve recognition performance.

For a single-microphone electronic device, a single-microphone enhancement algorithm used by the front-end enhancement module mainly subtracts a noise component from a time-frequency spectrum graph of a voice signal. For a multi-microphone electronic device, a plurality of multi-microphone enhancement algorithms are used by the front-end enhancement module, and mainly include a microphone directional algorithm, a beamforming algorithm, a time-frequency spectrum noise reduction algorithm (including a neural network algorithm), a blind source separation algorithm, and the like.

For example, the front-end enhancement module may further include a scenario analysis algorithm. The scenario analysis algorithm mainly analyzes a noise scenario, a downlink play voice source, uplink human voice energy, environmental noise energy, and the like. A scenario analysis result and a front-end enhancement processing algorithm are combined, to ensure noise reduction performance, and improve accuracy of voice wake-up, voiceprint recognition, and voice recognition. The downlink play voice source is voice or music currently played by the electronic device, and the uplink human voice energy is voice energy of the user.

After the electronic device is woken up by using the wake-up recognition module, the electronic device continues to upload a voice signal (the voice signal includes a wake-up word and a command statement) to a content segmentation module for content segmentation. The content segmentation module may segment the voice signal into a text-related voice signal and a text-independent voice signal. The text-related voice signal includes the wake-up word such as "Xiaoyi Xiaoyi", and the text-independent voice signal includes the command statement. Optionally, the content segmentation module may segment the voice signal by using a wake-up recognition result. The wake-up recognition result includes a start time point and an end time point of the wake-up word. Alternatively, the content segmentation module may recognize content of the voice signal for segmentation. The content segmentation module is disposed in a server, or may be disposed in the electronic device.

The text-related voice signal and the text-independent voice signal are uploaded to a voiceprint recognition and determining module for voiceprint recognition, to determine a registered user ID, and further obtain other personal information of the registered user ID from an information structure.

A content recognition module is configured to perform content recognition on the text-independent voice information in the voice signal, and determine a user command that needs to be executed, for example, a song needs to be acquired, or a recipe needs to be returned. Optionally, the content recognition module may be disposed in the server, or may be disposed in the electronic device.

The voiceprint recognition and determining module performs voiceprint comparison verification based on a voiceprint feature of a registered user that has been stored in the electronic device (including a text-related voiceprint feature and a text-independent voiceprint feature) and a voiceprint feature of a collected voice signal (including a text-related voiceprint feature and a text-independent voiceprint feature), to determine whether the user is a registered user; and if the user is a registered user, inputs a registered user ID and a user command that needs to be executed into a personalized service application APP, and further provides a personalized service and makes a personalized recommendation based on personal information corresponding to the registered user ID and the user command that needs to be executed. As shown in FIG. 5B-1 to FIG. 5B-4, communication is performed with the user based on a dialect corresponding to the registered user ID. As shown in FIG. 6B-1 to FIG. 6B-3, a recipe and an exercise type are specifically recommended based on health information corresponding to the registered user ID. For specific implementations, refer to the descriptions in the implementations in FIG. 5B-1 to FIG. 5B-4 and FIG. 6B-1 to FIG. 6B-3. Details are not described herein again. For a specific procedure in which the voiceprint recognition and determining module performs voiceprint recognition, refer to the specific descriptions in the implementations in FIG. 10A and FIG. 10B and FIG. 11. Details are not described herein.

If the user is not a registered user, the voiceprint recognition and determining module loads a common setting based on the user command that needs to be executed, to provide a common service.

FIG. 9B-1 and FIG. 9B-2 are a diagram of another system architecture according to an implementation of this application. A difference between the system architecture in FIG. 9B-1 and FIG. 9B-2 and the system architecture in FIG. 9A-1 and FIG. 9A-2 lies in that, in FIG. 9A-1 and FIG. 9A-2, wake-up recognition is performed only after human voice detection determining succeeds, or otherwise, a current batch of data is discarded. In FIG. 9B-1 and FIG. 9B-2, a human voice detection module and a wake-up recognition module are fused. After microphone activity detection succeeds, a voice signal enters a fusion module, and the fusion module outputs a determining result. The fusion module includes the human voice detection module and the wake-up recognition module. If the determining result output by the fusion module indicates "fail", it may indicate that the human voice detection module fails, or the wake-up recognition module fails, or both the human voice detection module and the wake-up recognition module fail.

For an operation performed by another module in FIG. 9B-1 and FIG. 9B-2, refer to the descriptions in the implementation in FIG. 9A-1 and FIG. 9A-2. Details are not described herein again.

FIG. 10A and FIG. 10B show a processing procedure of performing voiceprint recognition by the voiceprint recognition and determining module in FIG. 9A-1 and FIG. 9A-2 and FIG. 9B-1 and FIG. 9B-2. The processing procedure mainly includes a text-related voiceprint recognition module, a text-independent voiceprint recognition module, an anti-recording attack detection module, a score fusion module, and a comparison determining module.

The text-related voiceprint recognition module obtains, based on a text-related voiceprint model, a text-related voiceprint feature of a text-related voice signal obtained through content segmentation, and calculates a text-related comparison score between the text-related voiceprint feature and a text-related voiceprint feature of each registered user.

The text-independent voiceprint recognition module obtains, based on a text-independent voiceprint model, a text-independent voiceprint feature of a text-independent voice signal obtained through content segmentation, and calculates a text-independent comparison score between the text-independent voiceprint feature and a text-independent voiceprint feature of each registered user.

The score fusion module performs fusion calculation on each text-related comparison score obtained by the text-related voiceprint recognition module and each text-independent comparison score obtained by the text-independent voiceprint recognition module, to obtain a plurality of voiceprint scores corresponding to each registered user. One voiceprint score corresponds to one registered user. There are many fusion calculation policies, and a simplest method thereof is weighted summation, that is, an optimal weighted summation ratio only needs to be selected.

Optionally, before performing fusion calculation, the score fusion module may further normalize each text-related comparison score and each text-independent comparison score, to ensure basic consistency of score mean values and distributions of the two scores, and ensure feasibility and effect of fusion calculation.

After the score fusion module obtains voiceprint scores of a current user and each registered user, the comparison determining module compares each voiceprint score with a threshold of a corresponding registered user, to determine a registered user who is the current user. For a specific comparison manner, refer to descriptions in the implementation in FIG. 11. Details are not described herein.

The anti-recording attack detection module may be deployed at different locations. As shown in FIG. 10A and FIG. 10B, the anti-recording attack detection module may be deployed at a location at which parallel processing is performed together with the voiceprint recognition module. Optionally, the anti-recording attack detection module may be deployed before the voiceprint recognition module, and if an output detection result indicates "positive", the voiceprint recognition module performs voiceprint recognition. There are two types of results output by the foregoing anti-recording attack detection module: One type indicates "positive", that is, it is determined that a voice signal is voiced by a real person. The other type indicates "negative", that is, it is determined that a voice signal is not voiced by a real person. The anti-recording attack detection module eliminates a possibility of recording synthesis and play attacks. Once a voice signal that is not voiced by a real person is identified, the module loads a common setting and provides a basic service.

FIG. 11 describes in more detail a comparison score calculation process and a comparison determining process in a voiceprint recognition and determining module. First, a text-related voiceprint feature is extracted for a text-related voiceprint signal in a voice signal of a user by using a trained text-related voiceprint model. Then, the extracted text-related voiceprint feature is compared with text-related voiceprint features stored when all registered users register, and a plurality of text-related comparison scores between the text-related voiceprint feature of the user and the text-related voiceprint features of all the registered users are calculated. One text-related comparison score corresponds to one registered user, and the text-related comparison score is a comparison score between a text-related voiceprint feature of a user and a text-related voiceprint feature of the registered user. Correspondingly, a text-independent voiceprint feature is extracted for a text-independent voiceprint signal in a voice signal of a user by using a trained text-independent voiceprint model. Then, the extracted text-independent voiceprint feature is compared with text-independent voiceprint features stored when all registered users register, and a plurality of text-independent comparison scores between the text-independent voiceprint feature of the user, and the text-independent voiceprint features of all the registered users are calculated. One text-independent comparison score corresponds to one registered user, and the text-independent comparison score is a comparison score between a text-independent voiceprint feature of a user and a text-independent voiceprint feature of the registered user.

A text-related comparison score and a text-independent comparison score that correspond to each registered user are obtained, and score fusion calculation is performed on the text-related comparison score and the text-independent comparison score that correspond to each registered user, to obtain a voiceprint score corresponding to each registered user. The voiceprint score indicates a degree of voiceprint match between the use and the registered user.

The comparison determining module compares a voiceprint score corresponding to each registered user with a threshold corresponding to the registered user, and determines, based on a comparison result, whether a user is the registered user. In the implementations of this application, the electronic device sets dual thresholds. To be specific, each registered user sets two thresholds: a high threshold and a low threshold. A same high threshold and a same low threshold may be set for all registered users, or a same high threshold and a same low threshold are set for registered users belonging to a same category in all registered users. For example, a same high threshold and a same low threshold are set for registered users who are all male children, and a same high threshold and a same low threshold are set for registered users who are all young and middle-aged women.

The high and low thresholds for the registered user are obtained through a large quantity of offline data tests in combination with various performance indicators, such as a false rejection rate (which indicates that the user is a registered user, but is rejected) and a false reception rate (which indicates that the user is not a registered user, but is identified as a registered user). A higher threshold corresponds to a lower false reception rate and a higher false rejection rate.

Optionally, a same high threshold and a same low threshold are set for all registered users. If a voiceprint score corresponding to a registered user is highest through fusion calculation, that is, a degree of voiceprint match between a user and the registered user is highest, and the voiceprint score corresponding to the registered user is higher than the high threshold of the registered user, it is determined that the user is the registered user, and a personalized service is provided for the user based on personal information corresponding to a registered user ID.

If a voiceprint score corresponding to a registered user is highest through fusion calculation, but the voiceprint score is lower than the high threshold of the registered user but higher than the low threshold of the registered user, the electronic device loads a common setting in response to a command of the user, and the voiceprint recognition module continues to wait for the user to input a voice signal, to perform voiceprint recognition by using more data, and determine a subsequent action.

If a voiceprint score corresponding to a registered user is highest through fusion calculation, but the voiceprint score is lower than the low threshold for all the registered users, it is determined that no registered user is identified, and the system directly loads a common setting and provides a basic service.

Optionally, a same high threshold and a same low threshold are set for registered users of a same category in all registered users, and different high thresholds and different low thresholds are set for registered users of different categories. For example, high thresholds and low thresholds are separately set for registered users based on a gender and an age bracket.

A voiceprint score corresponding to each registered user is obtained through fusion calculation, and the voiceprint score corresponding to each registered user is compared with a high threshold for the registered user. For example, a voiceprint score corresponding to a registered user A is compared with a high threshold for the registered user A. If a voiceprint score corresponding to only one registered user exceeds a high threshold for the registered user, a user is determined as the registered user. If voiceprint scores corresponding to a plurality of registered users exceed high thresholds for the registered users, a registered user whose voiceprint score exceeds a maximum high threshold is selected, and a user is determined as the registered user. If a voiceprint score corresponding to no registered user exceeds a high threshold for registered users, a registered user whose voiceprint score exceeds a maximum low threshold is selected as a candidate user, and the voiceprint recognition module continues to wait for the user to input a voice signal, to perform comparison calculation between the user and the candidate user. If voiceprint scores corresponding to all registered users are lower than low thresholds for the registered users, a common setting is loaded, and a basic service is provided.

It should be noted that there are many combinations of the foregoing voiceprint model (including the text-related voiceprint model and the text-independent voiceprint model) and a comparison score calculation algorithm. Currently, the following combinations can be used: a GMM-UBM model and a log-likelihood comparison score calculation algorithm, a DNN-ivector model and an LDA plus PLDA comparison score calculation algorithm, and an x-vector model and an LDA plus PLDA comparison score calculation algorithm. Dedicated text-related corpus and text-independent corpus that are adapted to the GMM-UBM model and parameter, the DNN-ivector model and parameter, and the x-vector model and parameter are obtained through training performed by using a machine learning algorithm.

After the electronic device identifies that the current user is a registered user and responds, in a subsequent voiceprint recognition process, a setting of another registered user is reloaded only when a result identified by the voiceprint recognition module is different from a previous result, that is, the voiceprint recognition module identifies that the current user, is the another registered user.

In the voiceprint recognition and determining process in the implementations of this application, voiceprint recognition may be performed once in each interaction task, and a corresponding result is provided; or voiceprint recognition may be performed after a specific period of time and when a new interaction task starts, and a response result is output. One interaction task is a task completed through one complete wake-up, response, command, and subsequent interaction between the user and the electronic device, and is referred to as "one interaction task". In other words, a task completed through interaction before the electronic device enters a standby state again is a same interaction task. When the electronic device enters the standby state again, the electronic device needs to be woken up by using a wake-up word. As shown in FIG. 5A-1 to FIG. 5A-4, the task is one interaction task.

FIG. 12 is a diagram of an architecture of a function module included in an electronic device according to an implementation of this application. Details are as follows:

An input device may include a pickup device, a touchscreen, and a camera, and the pickup device may include a microphone. In this implementation of this application, the input device collects a voice signal of a user.

An output device may include a play device, such as a speaker or a receiver. Optionally, the electronic device in this implementation of this application may further include a screen, or may not include a screen. The screen is configured to display a graphical user interface of the electronic device.

A scenario analysis module is configured to process uplink human voice energy and a downlink play voice source in a process of interaction between the user and the electronic device, and obtain scenario information in a current use process of the user through analysis, for example, whether there is voice source play, a noise environment, user voice energy, and a pickup signal-to-noise ratio. The uplink human voice energy may be voice energy obtained by the user from the microphone. The downlink play voice source is voice source play of the electronic device, for example, playing music by the electronic device.

An augmentation module is configured to comprehensively use the information obtained by the scenario analysis module to assist in performing voice augmentation, to improve performance of wake-up recognition, voiceprint recognition, and voice recognition.

A wake-up recognition module may be configured to perform wake-up recognition on a voice signal processed by the augmentation module, that is, identify whether the voice signal includes a wake-up word; and if it is identified that the voice signal includes the wake-up word, wake up the electronic device, that is, the electronic device switches from a standby state to a working state.

A voice recognition module may be configured to implement text conversion on the voice signal processed by the augmentation module. For example, the user outputs an utterance "Xiaoyi Xiaoyi, I want to listen to a song", and the input module collects a voice signal of the utterance, and inputs the voice signal into the voice recognition module for text conversion, to obtain a text corresponding to the voice signal: "Xiaoyi Xiaoyi, I want to listen to a song".

A natural language understanding module may be configured to understand a language structure, semantics, and meanings of the text obtained by the voice recognition module through conversion or a text input by another device such as a touchscreen. In this case, semantic understanding needs to be performed by using other database knowledge, for example, a knowledge graph.

A voiceprint recognition and determining module may be configured to perform voiceprint recognition and determining on the voice signal processed by the augmentation module, to determine a registered user that is the current user. For specific voiceprint recognition and determining, refer to the descriptions in the implementations in FIG. 9A-1 and FIG. 9A-2, FIG. 9B-1 and FIG. 9B-2, FIG. 10A and FIG. 10B, and FIG. 11. Details are not described herein again.

A dialog management module may be configured to connect the natural language understanding module, a natural language generation module, a retrieval and recommendation module, and a system task execution module, and determine a manner and content of replying to the user in a next step based on an output result of the natural language understanding module. Reply content may alternatively be determined based on an output result of the natural language understanding module and personal information corresponding to a registered user ID determined by the voiceprint recognition and determining module, to implement a personalized service. The reply manner may be that the natural language generation module generates a dialog text based on the reply content, and the voice synthesis module performs voice synthesis on the dialog text for voice reply. Alternatively, the retrieval and recommendation module performs retrieval and recommendation based on a user requirement, and a screen output manner is used for presentation. Alternatively, the system task execution module may perform a corresponding operation by generating an execution command. Alternatively, a plurality of reply manners may be certainly used simultaneously. As shown in FIG. 5A-1 to FIG. 5A-4, FIG. 5B-1 to FIG. 5B-4, FIG. 6A-1 and FIG. 6A-2, and FIG. 6B-1 to FIG. 6B-3, a reply manner may be voice reply, or may be screen display.

The natural language generation module may be configured to convert the reply content into dialog text information.

The voice synthesis module may be configured to convert, into an audio file by using a voice synthesis system, the dialog text information obtained by the natural language generation module through conversion, and play the audio file by using the play device in the output module. Optionally, an audio file of a specific tone may be synthesized based on personal information of a registered user. For example, if the registered user uses a dialect for communication, an audio file of a corresponding dialect needs to be synthesized. For details, refer to the descriptions in the implementation in FIG. 5B-1 to FIG. 5B-4. Details are not described herein again.

Optionally, if the user inputs information in a text input mode, the user may analyze the input text by using a text analysis module, and deliver an analysis result to the natural language understanding module to understand the language structure, semantics, and meanings. It may be understood that the user may alternatively interact with the electronic device in another input mode.

Optionally, the voice recognition module, the natural language understanding module, and the natural language generation module may be disposed on an electronic device whose computing resource condition is met, or may be disposed on a server. If the voice recognition module, the natural language understanding module, and the natural language generation module are disposed on the server, the voice signal is uploaded to the server for voice recognition and natural language understanding, and the server delivers related information to the electronic device. The related information may be information about an operation that needs to be performed by the electronic device, for example, song play information. The electronic device performs a corresponding operation based on the related information, for example, invokes a related app to play a song.

FIG. 13 is a schematic flowchart of a voice interaction method according to an implementation of this application. For an example implementation of this implementation of this application, refer to the implementations in FIG. 5A-1 to FIG. 5A-4 and FIG. 5B-1 to FIG. 5B-4. Details are not described herein again. As shown in the figure, the voice interaction method may include the following steps.

S101: An electronic device receives a first voice signal, where the first voice signal includes a wake-up word.

In this implementation of this application, an example implementation of the first voice signal may include the voice signal corresponding to the utterance 1 in FIG. 5B-1 to FIG. 5B-4.

S102: The electronic device switches from a standby state to a working state based on the wake-up word, and the electronic device outputs a second voice signal in a first tone, where content of the second voice signal is used to respond to content of the first voice signal, the first tone is obtained based on personal information associated with a voiceprint feature of the first voice signal, the personal information associated with the voiceprint feature of the first voice signal includes personal information corresponding to a first registered voice signal, and in a plurality of registered voice signals, a voiceprint feature of the first registered voice signal is most similar to the voiceprint feature of the first voice signal.

The first tone in this implementation of this application is obtained based on the personal information associated with the voiceprint feature of the first voice signal. For example, if the personal information is a Chongqing dialect, the second voice signal is output in a tone of the Chongqing dialect. An example implementation of the second voice signal may include the voice signal corresponding to the utterance 2 in FIG. 5B-1 to FIG. 5B-4.

When determining that a second tone of the first voice signal is the same as a first tone of the second voice signal, the electronic device outputs the second voice signal in the first tone.

The personal information stored in the electronic device may be obtained by the electronic device through voice recognition, or may be obtained by a user through voice signal interaction. An example implementation of a fifth voice signal in this implementation of this application may include the voice signal corresponding to the utterance 3 in FIG. 5A-1 to FIG. 5A-4.

FIG. 14 is a schematic flowchart of another voice interaction method according to an implementation of this application. For an example implementation of this implementation of this application, refer to the implementations in FIG. 2A-1 and FIG. 2A-2 to FIG. 2G-1 to FIG. 2G-3, FIG. 7A-1 to FIG. 7A-4 to FIG. 7C-1 to FIG. 7C-4, and FIG. 8A and FIG. 8B. Details are not described herein again. As shown in the figure, the voice interaction method may include the following steps.

S201: An electronic device establishes a first data connection to a terminal device.

An example implementation of the first data connection in this implementation of this application may include the data connection between the electronic device and the terminal device shown in FIG. 7A-1 to FIG. 7A-4, FIG. 7B-1 and FIG. 7B-2, or FIG. 7C-1 to FIG. C-4.

S202: The electronic device receives, by using the first data connection, shared information sent by the terminal device.

S203: Output a first voice signal, where the first voice signal is used to prompt to correspondingly store the shared information and a first registered user identifier, the first registered user identifier is used to identify a voiceprint feature of a first registered voice signal in the electronic device, and the first registered user identifier is associated with the terminal device.

In this implementation of this application, an example implementation of the shared information sent by the terminal device may include the shared information shown in the user interface 83 in FIG. 7A-1 to FIG. 7A-4, the shared information shown in the user interface 86 in FIG. 7B-1 and FIG. 7B-2, or the shared information shown in the user interface 91 in FIG. 7C-1 to FIG. 7C-4.

In this implementation of this application, an example implementation of the first voice signal may include the voice signal corresponding to the utterance 1 in FIG. 8A.

A manner of associating the first registered user identifier with the terminal device may be associating the first account with the electronic device in the manners shown in FIG. 2C-1 to FIG. 2C-5 and FIG. 2D, that is, establishing a third data connection between the electronic device and the terminal device, or may be the manner shown in FIG. 2G-1 to FIG. 2G-3, that is, establishing a second data connection between the electronic device and the terminal device. Alternatively, association may be performed in the manners shown in the user interface 88, the user interface 89, and the user interface 90 in FIG. 7C-1 to FIG. 7C-4. The electronic device outputs a fourth voice signal, to prompt a user to select one registered user identifier from a plurality of registered user identifiers to be associated with the terminal device. It may be understood that the electronic device may alternatively send a plurality of registered user identifiers to the terminal device, and a user performs selection on the terminal device. This is not limited in this application.

S204: The electronic device receives a second voice signal, where in a plurality of registered voice signals, a voiceprint feature of the second voice signal is most similar to the voiceprint feature of the first registered voice signal.

In this implementation of this application, an example implementation of the second voice signal may include the voice signal corresponding to the utterance 1 in FIG. 8B.

S205: The electronic device outputs a third voice signal, where content of the third voice signal is used to respond to content of the second voice signal, and the content of the third voice signal is obtained based on the shared information.

In this implementation of this application, an example implementation of the third voice signal may include the voice signal corresponding to the utterance 2 in FIG. 8B. The content of the voice signal is obtained based on the shared information received by the electronic device in FIG. 8A.

FIG. 15 is a schematic flowchart of still another voice interaction method according to an implementation of this application. For an example implementation of this implementation of this application, refer to the implementations in FIG. 6A-1 and FIG. 6A-2 and FIG. 6B-1 to FIG. 6B-3. Details are not described herein again. As shown in the figure, the voice interaction method may include the following steps.

S301: An electronic device receives a first voice signal, where the first voice signal is used to indicate the electronic device to obtain personal information by collecting an image.

In this implementation of this application, an example implementation of the first voice signal includes the voice signal corresponding to the utterance 4 in FIG. 6A-1 and FIG. 6A-2.

S302: The electronic device collects a first image of a photographed object.

In this implementation of this application, an example implementation of the photographed object may include the XXX checklist in FIG. 6A-1 and FIG. 6A-2.

S303: The electronic device outputs a second voice signal, where the second voice signal is used to prompt to correspondingly store first personal information and a first registered user identifier, the first personal information is obtained by identifying the first image, the first registered user identifier is used to identify a voiceprint feature of a first registered voice signal in the electronic device, and in a plurality of registered voice signals, a voiceprint feature of the first voice signal is most similar to the voiceprint feature of the first registered voice signal.

S304: The electronic device receives a third voice signal, where in the plurality of registered voice signals, a voiceprint feature of the third voice signal is most similar to the voiceprint feature of the first registered voice signal.

In this implementation of this application, an example implementation of the third voice signal may include the voice signal corresponding to the utterance 1 in FIG. 6B-1 to FIG. 6B-3.

S305: The electronic device outputs a fourth voice signal, where content of the fourth voice signal is used to respond to content of the third voice signal, and the content of the fourth voice signal is obtained based on the first person information.

In this implementation of this application, an example implementation of the fourth voice signal may include the voice signal corresponding to the utterance 2 in FIG. 6B-1 to FIG. 6B-3.

According to the context, the term "when" used in the foregoing implementations may be interpreted as a meaning of "if", "after", "in response to determining", or "in response to detecting". Likewise, according to the context, the phrase "when it is determined that" or "if (a stated condition or event) is detected" may be interpreted as a meaning of "if it is determined that", "in response to determining", "when (a stated condition or event) is detected", or "in response to detecting (a stated condition or event)".

All or some of the foregoing implementations may be implemented by using software, hardware, firmware, or any combination thereof. When software is used to implement the implementations, all or some of the implementations may be implemented in a form of a computer program product. The computer program product includes one or more computer instructions. When the computer program instructions are loaded and executed on a computer, all or some of the procedures or the functions according to the implementations of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

A person of ordinary skill in the art may understand and implement all or some of the processes of the methods in the implementations, and the procedure may be completed by a computer program instructing related hardware. The program may be stored in a computer-readable storage medium. When the program is executed, the processes of the methods in the implementations may be performed. The foregoing storage medium includes any medium that can store program code, such as a ROM, a random access memory RAM, a magnetic disk, or an optical disk.

The scope of protection is defined by the appended claims.

## Claims

1. A voice interaction method performed by an electronic device, the method comprising:
receiving (S101), by the electronic device, a first voice signal, wherein the first voice signal comprises a wake-up word; and
switching (S102), by the electronic device, from a standby state to a working state based on the wake-up word, and outputting, by the electronic device, a second voice signal in a first tone, wherein content of the second voice signal is used to respond to content of the first voice signal, the first tone is obtained based on personal information associated with a voiceprint feature of the first voice signal, the personal information associated with the voiceprint feature of the first voice signal comprises personal information corresponding to a first registered voice signal, and in a plurality of registered voice signals, a voiceprint feature of the first registered voice signal is most similar to the voiceprint feature of the first voice signal;
wherein a tone of the first voice signal is a second tone; and wherein the method is **characterised in that**, before the outputting, by the electronic device, a second voice signal in a first tone, the method further comprises: determining, by the electronic device, whether the first tone is the same as the second tone; and
when determining, by the electronic device, that the first tone is different from the second tone, the method further comprises:
outputting a third voice signal, wherein the third voice signal is used to prompt a user to determine whether to communicate by using a voice signal in the first tone; and
receiving, by the electronic device, a fourth voice signal, wherein the fourth voice signal indicates to communicate by using a voice signal in the first tone.

2. The method according to claim 1, wherein the personal information comprises dialect information, and the first tone is a tone for outputting the second voice signal in a dialect indicated by the dialect information; or
the personal information comprises language information, and the first tone is a tone for outputting the second voice signal in a language indicated by the language information; or
the personal information comprises age information and/or gender information, and the first tone is a tone configured for an age bracket indicated by the age information and/or people corresponding to a gender indicated by the gender information.

3. The method according to claim 2, wherein before the receiving, by an electronic device, a first voice signal, the method further comprises:
receiving, by the electronic device, a fifth voice signal; and
performing, by the electronic device, voice recognition on the fifth voice signal to obtain the personal information, and correspondingly storing the personal information and the first registered voice signal; or determining that the fifth voice signal comprises the personal information, and correspondingly storing the personal information in the fifth voice signal and the first registered voice signal, wherein
in the plurality of registered voice signals, a voiceprint feature of the fifth voice signal is most similar to the voiceprint feature of the first registered voice signal.

4. An electronic device configured to perform a method according to any one of claims 1 to 3.

## Patentansprüche

1. Sprachinteraktionsverfahren, das durch eine elektronische Vorrichtung durchgeführt wird, wobei das Verfahren Folgendes umfasst:
Empfangen (S101) durch die elektronische Vorrichtung eines ersten Sprachsignals, wobei das erste Sprachsignal ein Aufwachwort umfasst; und
Schalten (S102) durch die elektronische Vorrichtung von einem Bereitschaftszustand zu einem Arbeitszustand auf der Grundlage des Aufwachworts und Ausgeben durch die elektronische Vorrichtung eines zweiten Sprachsignals in einem ersten Tonfall, wobei der Inhalt des zweiten Sprachsignals verwendet wird, um auf Inhalt des ersten Sprachsignals zu antworten, der erste Tonfall auf der Grundlage von persönlichen Informationen erhalten wird, die einem Stimmabdruckmerkmal des ersten Sprachsignals zugeordnet sind, die persönlichen Informationen, die dem Stimmabdruckmerkmal des ersten Sprachsignals zugeordnet sind, persönliche Informationen umfassen, die einem ersten registrierten Sprachsignal entsprechen, und in mehreren registrierten Sprachsignalen ein Stimmabdruckmerkmal des ersten registrierten Sprachsignals dem Stimmabdruckmerkmal des ersten Sprachsignals am ähnlichsten ist;
wobei ein Tonfall des ersten Sprachsignals ein zweiter Tonfall ist; und
das Verfahren **dadurch gekennzeichnet ist, dass**
vor dem Ausgeben durch die elektronische Vorrichtung eines zweiten Sprachsignals in einem ersten Tonfall das Verfahren ferner Folgendes umfasst:
Bestimmen durch die elektronische Vorrichtung, ob der erste Tonfall derselbe wie der zweite Tonfall ist; und
dann, wenn durch die elektronische Vorrichtung bestimmt wird, dass der erste Tonfall vom zweiten Tonfall verschieden ist, das Verfahren ferner Folgendes umfasst:
Ausgeben eines dritten Sprachsignals, wobei das dritte Sprachsignal verwendet wird, einen Benutzer aufzufordern, zu bestimmen, ob unter Verwendung eines Sprachsignals im ersten Tonfall kommuniziert werden soll; und
Empfangen durch die elektronische Vorrichtung eines vierten Sprachsignals, wobei das vierte Sprachsignal angibt, unter Verwendung eines Sprachsignals im ersten Tonfall zu kommunizieren.

2. Verfahren nach Anspruch 1, wobei die persönlichen Informationen Dialektinformationen umfassen und der erste Tonfall ein Tonfall zum Ausgeben des zweiten Sprachsignals in einem Dialekt ist, der durch die Dialektinformationen angegeben wird; oder
die persönlichen Informationen Sprachinformationen umfassen und der erste Tonfall ein Tonfall zum Ausgeben des zweiten Sprachsignals in einer Sprache ist, die durch die Sprachinformationen angegeben wird; oder
die persönlichen Informationen Altersinformationen und/oder Geschlechtsinformationen umfassen und der erste Tonfall ein Tonfall ist, der für eine Altersgruppe, die durch die Altersinformationen angegeben wird, und/oder Personen, die einem Geschlecht entsprechen, das durch die Geschlechtsinformationen angegeben wird, konfiguriert ist.

3. Verfahren nach Anspruch 2, wobei das Verfahren vor dem Empfangen durch eine elektronische Vorrichtung eines ersten Sprachsignals ferner Folgendes umfasst:
Empfangen durch die elektronische Vorrichtung eines fünften Sprachsignals und Durchführen durch die elektronische Vorrichtung einer Spracherkennung am fünften Sprachsignal, um die persönlichen Informationen zu erhalten, und entsprechendes Speichern der persönlichen Informationen und des ersten registrierten Sprachsignals; oder Bestimmen, dass das fünfte Sprachsignal die persönlichen Informationen umfasst, und entsprechendes Speichern der persönlichen Informationen im fünften Sprachsignal und des ersten registrierten Sprachsignals, wobei
in den mehreren registrierten Sprachsignalen ein Stimmabdruckmerkmal des fünften Sprachsignals dem Stimmabdruckmerkmal des ersten registrierten Sprachsignals am ähnlichsten ist.

4. Elektronische Vorrichtung, die konfiguriert ist, ein Verfahren nach einem der Ansprüche 1 bis 3 durchzuführen.

## Revendications

1. Procédé d'interaction vocale mis en œuvre par un dispositif électronique, le procédé comprenant :
la réception (S101), par le dispositif électronique, d'un premier signal vocal, le premier signal vocal comprenant un mot de réveil ; et
le passage (S102), par le dispositif électronique, d'un état de veille à un état de fonctionnement sur la base du mot de réveil, et l'émission en sortie, par le dispositif électronique, d'un deuxième signal vocal dans un premier ton, un contenu du deuxième signal vocal étant utilisé pour répondre à un contenu du premier signal vocal, le premier ton étant obtenu sur la base d'informations personnelles associées à une caractéristique d'empreinte vocale du premier signal vocal, les informations personnelles associées à la caractéristique d'empreinte vocale du premier signal vocal comprenant des informations personnelles correspondant à un premier signal vocal enregistré, et, parmi une pluralité de signaux vocaux enregistrés, une caractéristique d'empreinte vocale du premier signal vocal enregistré étant la plus similaire à la caractéristique d'empreinte vocale du premier signal vocal ;
un ton du premier signal vocal étant un deuxième ton ; et le procédé étant **caractérisé en ce qu'**avant l'émission en sortie, par le dispositif électronique, d'un deuxième signal vocal dans un premier ton, le procédé comprend en outre :
la détermination, par le dispositif électronique, si le premier ton est identique au deuxième ton ; et
lors de la détermination, par le dispositif électronique que le premier ton est différent du deuxième ton, le procédé comprenant en outre :
l'émission en sortie d'un troisième signal vocal, le troisième signal vocal étant utilisé pour inviter un utilisateur à déterminer s'il convient de communiquer au moyen d'un signal vocal dans le premier ton ; et
la réception, par le dispositif électronique, d'un quatrième signal vocal, le quatrième signal vocal indiquant de communiquer au moyen d'un signal vocal dans le premier ton.

2. Procédé selon la revendication 1, les informations personnelles comprenant des informations de dialecte, et le premier ton étant un ton pour l'émission en sortie du deuxième signal vocal dans un dialecte indiqué par les informations de dialecte ; ou
les informations personnelles comprenant des informations de langue, et le premier ton étant un ton pour l'émission en sortie du deuxième signal vocal dans une langue indiquée par les informations de langue ; ou
les informations personnelles comprenant des informations d'âge et/ou des informations de genre, et le premier ton étant un ton configuré pour une tranche d'âge indiquée par les informations d'âge et/ou pour des personnes correspondant à un genre indiqué par les informations de genre.

3. Procédé selon la revendication 2, avant la réception, par un dispositif électronique, d'un premier signal vocal, le procédé comprenant en outre :
la réception, par le dispositif électronique, d'un cinquième signal vocal ; et
la réalisation, par le dispositif électronique, d'une reconnaissance vocale sur le cinquième signal vocal pour obtenir les informations personnelles et le stockage correspondant des informations personnelles et du premier signal vocal enregistré ; ou la détermination que le cinquième signal vocal comprend les informations personnelles et le stockage correspondant des informations personnelles dans le cinquième signal vocal et du premier signal vocal enregistré,
parmi la pluralité de signaux vocaux enregistrés, une caractéristique d'empreinte vocale du cinquième signal vocal étant la plus similaire à la caractéristique d'empreinte vocale du premier signal vocal enregistré.

4. Dispositif électronique configuré pour réaliser un procédé selon l'une quelconque des revendications 1 à 3.
